# EUROPEAN PATENT APPLICATION

(11) **EP 4 199 598 A1**
(43) Date of publication of application: **21.06.2023**
(21) Application number: 21860107.8
(22) Date of filing: 06.08.2021
(51) Int. Cl.: H04W 48/08

(54) **METHOD FOR INDICATING LINK IN MULTI-LINK COMMUNICATION AND RELATED DEVICE**

(30) Priority: 28.08.2020 CN 202010890116
(71) Applicant: Huawei Technologies Co., Ltd., Shenzhen, Guangdong 518129 (CN)
(72) Inventor: GUO, Yuchen, Shenzhen, Guangdong 518129 (CN); GAN, Ming, Shenzhen, Guangdong 518129 (CN); LI, Yunbo, Shenzhen, Guangdong 518129 (CN); YU, Jian, Shenzhen, Guangdong 518129 (CN)
(74) Representative: Maiwald GmbH
(86) International application number: PCT/CN2021/111355
(87) International publication number: WO 2022/042268

(57) **Abstract**

This application relates to the wireless communication field, for example, is applicable to a wireless local area network supporting the 802.11be standard, and in particular, to a link indication method for multi-link communication and a related apparatus. The method includes: An AP MLD generates and sends a first frame on a first link. The first frame carries link indication information, indicating one or more second links. After receiving the first frame, a non-AP MLD enables the one or more second links indicated by the link indication information. According to embodiments of this application, both energy waste of the non-AP MLD and power consumption can be reduced, and high-speed and low-latency data transmission experience can be obtained.

## Description

This application claims priority to Chinese Patent Application No. 202010890116.2, filed with the China National Intellectual Property Administration on August 28, 2020 and entitled "LINK INDICATION METHOD FOR MULTI-LINK COMMUNICATION AND RELATED APPARATUS", which is incorporated herein by reference in its entirety.

### TECHNICAL FIELD

This application relates to the field of wireless communication technologies, and in particular, to a multi-link communication link indication method and apparatus.

### BACKGROUND

With development of wireless communication technologies, more wireless communication devices support multi-link communication, for example, simultaneous communication in the 2.4 GHz, 5 GHz, and 6 GHz bands, or simultaneous communication on different channels in a same band. Such wireless communication device is usually referred to as a multi-link device (multi-link device, MLD). It is clear that, the multi-link device may perform concurrent communication on a plurality of links, to greatly improve a transmission rate.

Because the plurality of links are used for communication, power consumption inevitably increases in a non-access point multi-link device (non-access point MLD, non-AP MLD). Therefore, to reduce the power consumption, the non-AP MLD may temporarily disable some links during off-peak hours to save energy. When a service arrives, all links may be enabled, to obtain high-speed and low-latency data transmission experience.

However, how to quickly switch a communication mode of the non-AP MLD, reduce the power consumption of the non-AP MLD, and obtain high-speed and low-delay data transmission experience has not been resolved currently.

### SUMMARY

Embodiments of this application provide a link indication method for multi-link communication and a related apparatus, to quickly switch a communication mode of a non-AP MLD, reduce energy waste of the non-AP MLD, reduce power consumption, and obtain high-speed and low-latency data transmission experience.

The following describes this application from different aspects. It should be understood that mutual reference may be made to the following implementations and advantageous effects of the different aspects.

According to a first aspect, this application provides a link indication method for multi-link communication. The method includes: An access point multi-link device (access point MLD, AP MLD) generates and sends a first frame on a first link. The first frame carries link indication information. The link indication information indicates one or more second links. The first frame indicates a non-AP MLD to enable the one or more second links.

Optionally, the first link is in an active state/doze state, and the second link is currently in a doze state/disabled state.

Optionally, the first frame may be a multi-user request to send (multiple user request to send, MU-RTS) frame, or a data frame, or a new frame.

It can be learned that in this solution, the non-AP MLD enables a specific link only based on an indication of the AP MLD. This can quickly switch a communication mode of the non-AP MLD, selectively enable a link, reduce energy waste due to blind enabling of all links by the non-AP MLD, reduce power consumption, and obtain high-speed and low-latency data transmission experience.

With reference to the first aspect, in a possible implementation, before the AP MLD sends the first frame, the method further includes: The AP MLD determines the first link and the one or more second links, and performs channel contention on the first link and the one or more second links. After a backoff counter on the first link backs off to 0, the AP MLD sends the first frame.

In this solution, channel contention is performed on the first link and the second link concurrently/simultaneously, so that after the first frame is sent on the first link, the backoff counter on the second link backs off to 0 as soon as possible. This can reduce waiting time after the non-AP MLD enables the second link, and further reduce energy waste of the non-AP MLD.

With reference to the first aspect, in a possible implementation, the method further includes: When duration of channel contention of the AP MLD on the second link exceeds first duration, the AP MLD stops performing channel contention on the second link, or skips sending data to the non-AP MLD after successful channel contention on the second link.

Optionally, the first duration may be set by the non-AP MLD, and the non-AP MLD notifies the AP MLD by using a frame.

Optionally, the first duration may be a transmission opportunity (transmission opportunity, TXOP) duration limit, namely, a TXOP limit. Alternatively, the first duration may be a TXOP limit corresponding to an access category of a data frame received by the non-AP MLD on the first link. Alternatively, the first duration may be a maximum length of a physical layer protocol data unit (physical layer protocol data unit, PPDU).

Optionally, the first duration may be a time length indicated by a duration (duration) field in the first frame.

In this solution, a timeout mechanism is set for the AP MLD, to stop/abandon channel contention on a link that is busy for long time. This can reduce power consumption of the AP MLD.

According to a second aspect, this application provides a link indication method for multi-link communication. The method includes: A non-AP MLD receives a first frame on a first link, and enables one or more second links based on link indication information carried in the first frame. The first frame indicates a non-AP MLD to enable the one or more second links.

Optionally, the first link is in an active state/doze state. Before the non-AP MLD enables the second link, the second link is in a doze state/disabled state. After the non-AP MLD enables the second link, the second link changes into the doze state/disabled state.

Optionally, the first frame may be a MU-RTS frame, or a data frame, or a new frame.

With reference to the second aspect, in a possible implementation, after the non-AP MLD enables the one or more second links, the method further includes: If duration in which the non-AP MLD enables the second link exceeds first duration, and no frame sent by the AP MLD to the non-AP MLD is received on the second link within the first duration, the non-AP MLD disables the second link.

Optionally, the first duration may be set by the non-AP MLD, and the non-AP MLD notifies the AP MLD by using a frame.

Optionally, the first duration may be a TXOP limit. Alternatively, the first duration may be a TXOP limit corresponding to an access category of a data frame received by the non-AP MLD on the first link. Alternatively, the first duration may be a maximum PPDU length.

Optionally, the first duration may be a time length indicated by a duration (duration) field in the first frame.

In this solution, a timeout mechanism is set for the non-AP MLD, to disable some second links on which no data is transmitted for long time. This can further reduce energy waste of the non-AP MLD and save power consumption.

According to a third aspect, this application provides a communication apparatus. The communication apparatus may be an AP MLD or a chip in an AP MLD, for example, a Wi-Fi chip. The communication apparatus includes: a processing unit, configured to generate a first frame, where the first frame carries link indication information, the link indication information indicates one or more second links, and the first frame indicates a non-access point multi-link device non-AP MLD to enable the one or more second links; and a transceiver unit, configured to send the first frame on a first link.

Optionally, the first link is in an active state/doze state, and the second link is currently in a doze state/disabled state.

Optionally, the first frame may be a MU-RTS frame, or a data frame, or a new frame.

With reference to the third aspect, in a possible implementation, the processing unit is further configured to: determine the first link and the one or more second links, and perform channel contention on the first link and the one or more second links. The transceiver unit is specifically configured to: after a backoff counter on the first link backs off to 0, the AP MLD sends the first frame.

With reference to the third aspect, in a possible implementation, the processing unit is further configured to: when duration of channel contention on the second link exceeds first duration, stop performing channel contention on the second link, or skip sending data to the non-AP MLD after successful channel contention on the second link.

Optionally, the first duration may be set by the non-AP MLD, and the non-AP MLD notifies the AP MLD by using a frame.

Optionally, the first duration may be a TXOP limit. Alternatively, the first duration may be a TXOP limit corresponding to an access category of a data frame received by the non-AP MLD on the first link. Alternatively, the first duration may be a maximum PPDU length.

Optionally, the first duration may be a time length indicated by a duration (duration) field in the first frame.

According to a fourth aspect, this application provides a communication apparatus. The communication apparatus may be a non-AP MLD or a chip in a non-AP MLD, for example, a Wi-Fi chip. The communication apparatus includes: a transceiver unit, configured to receive a first frame on a first link, where the first frame carries link indication information, the link indication information indicates one or more second links, and the first frame indicates the non-AP MLD to enable the one or more second links; and a processing unit, configured to enable the one or more second links based on the link indication information carried in the first frame.

Optionally, the first link is in an active state/doze state. Before the non-AP MLD enables the second link, the second link is in a doze state/disabled state. After the non-AP MLD enables the second link, the second link changes into the doze state/disabled state.

Optionally, the first frame may be a MU-RTS frame, or a data frame, or a new frame.

With reference to the fourth aspect, in a possible implementation, the processing unit is further configured to: when duration in which the communication apparatus enables the second link exceeds first duration, and no frame sent by the AP MLD to the communication apparatus is received on the second link within the first duration, disable the second link.

Optionally, the first duration may be set by the non-AP MLD, and the non-AP MLD notifies the AP MLD by using a frame.

Optionally, the first duration may be a TXOP limit. Alternatively, the first duration may be a TXOP limit corresponding to an access category of a data frame received by the non-AP MLD on the first link. Alternatively, the first duration may be a maximum PPDU length.

Optionally, the first duration may be a time length indicated by a duration (duration) field in the first frame.

In an implementation of any one of the foregoing aspects, the first frame is an MU-RTS frame, and the link indication information is carried in a user information field in the MU-RTS frame.

Optionally, the user information field includes a link information field or a link identifier bitmap. The link indication information is carried in the link information field or the link identifier bitmap.

Optionally, the user information field further includes an association identifier (association identifier) AID 12 field and a real AID field. The AID 12 field indicates that the user information field includes the link information field or the link identifier bitmap. A value of the AID 12 field is set to a preset value, for example, a value in a range [2008, 2047], to indicate that the user information field is redefined. The real AID field indicates an AID of the non-AP MLD.

Optionally, a reserved bit in the user information field indicates that the user information field includes the link information field or the link identifier bitmap. The reserved bit in the user information field may also indicate that the user information field is redefined.

In this solution, the user information field in the MU-RTS frame is reused to indicate one or more second links, and the AID 12 field is further set to the preset value to indicate that the user information field in the MU-RTS frame is redefined. Therefore, a frame does not need to be redesigned to indicate the second link, reducing signaling overheads.

In an implementation of any one of the foregoing aspects, the first frame is an MU-RTS frame. The MU-RTS frame includes two user information fields corresponding to the non-AP MLD: a first user information field and a second user information field. The link indication information is carried in the second user information field. The first user information field indicates the non-AP MLD to transmit resource scheduling information for a clear to send (clear to send) CTS frame.

Optionally, the second user information field includes a link information field or a link identifier bitmap. The link indication information is carried in the link information field or the link identifier bitmap.

Optionally, the second user information field further includes an AID 12 field. The AID 12 field indicates that the second user information field includes the link information field or the link identifier bitmap. A value of the AID 12 field is set to a preset value, for example, a value in a range [2008, 2047]. Alternatively, a value of the AID 12 field is set to be the same as a value of an AID 12 field in the first user information field.

In this solution, the user information field in the MU-RTS frame is reused to indicate one or more second links, and the reserved bit in the user information field may also indicate that the user information field is redefined, so that the meaning of the AID 12 field is clear.

In an implementation of any one of the foregoing aspects, the first frame is a data frame, and the link indication information may be carried in an aggregated control (A-control) field in a media access control header (MAC Header) of the data frame.

In this solution, the link indication information may be carried in the data frame to indicate one or more second links, so that after receiving data from the AP MLD, the non-AP MLD enables the second link. In this way, the AP MLD can transmit data by using a plurality of links, improving a peak transmission rate and reducing a delay.

In an implementation of any one of the foregoing aspects, the first frame may be a newly defined frame, and the link indication information is located in a frame body of the defined frame.

In this solution, the link indication information may be carried in the MU-RTS frame, the data frame, and the newly defined frame. The meaning is clear, and an implementation is flexible.

In an implementation of any one of the foregoing aspects, the link indication information may include a link identifier of the second link, and optionally, may further include a number of spatial streams of the second link.

In this solution, the number of spatial streams of the second link is carried in the link indication information. This helps the non-AP MLD to enable a plurality of spatial streams of the second link to send and receive data, further improving communication efficiency.

In an implementation of any one of the foregoing aspects, the second link is in an idle state. Alternatively, a backoff counter value of the AP MLD in channel contention on the second link is less than or equal to a preset threshold. Alternatively, a length of a data packet received by the AP MLD on the second link is less than or equal to a preset length.

In this solution, a channel contention status of the second link is limited. This helps the AP MLD obtain a transmission opportunity in a short time period.

According to a fifth aspect, this application provides a link indication method for multi-link communication. The method includes: After receiving a data frame on a first link, a non-AP MLD generates and sends indication information on the first link. The indication information indicates one or more second links.

Optionally, the first link is in an active state/enabled state. Before the non-AP MLD enables the second link, the second link is in a doze state/disabled state. After the non-AP MLD enables the second link, the second link changes into the active state/enabled state.

Optionally, the indication information may be carried in an acknowledgment frame. The acknowledgment frame may be a multi-station block acknowledgment (multi-STA block acknowledge, M-BA) frame.

It can be learned that in this solution, the non-AP MLD carries the indication information in the acknowledgment frame to indicate an AP MLD that the non-AP MLD enabled another link. This helps the AP MLD send the data frame to the non-AP MLD on the another link, increasing a peak transmission rate and reducing a data transmission delay.

According to a sixth aspect, this application provides a link indication method for multi-link communication. The method includes: An AP MLD receives indication information on a first link, and sends a data frame to a non-AP MLD on one or more second links indicated by the indication information.

Optionally, the first link is in an active state/enabled state. Before the non-AP MLD enables the second link, the second link is in a doze state/disabled state. After the non-AP MLD enables the second link, the second link changes into the active state/enabled state.

Optionally, the indication information may be carried in an acknowledgment frame. The acknowledgment frame may be an M-BA frame.

According to a seventh aspect, this application provides a communication apparatus. The communication apparatus may be a non-AP MLD or a chip in the non-AP MLD, for example, a Wi-Fi chip. The communication apparatus includes: a processing unit, configured to: after receiving a data frame on a first link, generates indication information, where the indication information indicates one or more second links; and a transceiver unit, configured to send the indication information on the first link.

Optionally, the first link is in an active state/enabled state. Before the non-AP MLD enables the second link, the second link is in a doze state/disabled state. After the non-AP MLD enables the second link, the second link changes into the active state/enabled state.

Optionally, the indication information may be carried in an acknowledgment frame. The acknowledgment frame may be an M-BA frame.

According to an eighth aspect, this application provides a communication apparatus. The communication apparatus may be an AP MLD or a chip in the AP MLD, for example, a Wi-Fi chip. The communication apparatus includes a transceiver unit, configured to: receive indication information on a first link, and send a data frame to a non-AP MLD on one or more second links indicated by the indication information.

Optionally, the communication apparatus further includes a processing unit, configured to: generate the data frame, and perform channel contention on the one or more second links indicated by the indication information. The transceiver unit is specifically configured to: after successful channel contention on the one or more second links, send the data frame to the non-AP MLD on the one or more second links.

Optionally, the first link is in an active state/enabled state. Before the non-AP MLD enables the second link, the second link is in a doze state/disabled state. After the non-AP MLD enables the second link, the second link changes into the active state/enabled state.

Optionally, the indication information may be carried in an acknowledgment frame. The acknowledgment frame may be an M-BA frame.

In an implementation of any one of the foregoing aspects, the indication information is specifically carried in a per AID traffic identifier (traffic identifier) TID information field in the acknowledgment frame.

Optionally, the per AID TID information field includes a control segment field. The control segment field includes one or more A-control fields. The A-control field carries the indication information.

In this solution, the acknowledgment frame of the data frame is reused to indicate a specific link that is to be enabled/has been enabled by the non-AP MLD, to reduce signaling overheads. In addition, the AP MLD can obtain information about the second link as early as possible. This can reduce waiting time of the non-AP MLD on the second link and reduce power consumption of the non-AP MLD.

In an implementation of any one of the foregoing aspects, the indication information may include one or more of the following: a link identifier of the second link, a link status of the second link, and a number of spatial streams of the second link.

In this solution, the link status and the number of spatial streams are carried in the indication information. This helps the AP MLD obtain more second link information.

According to a ninth aspect, this application provides a multiple spatial stream communication method. The method includes: An AP MLD generates an MU-RTS frame, and sends the MU-RTS frame on a first link. The MU-RTS frame carries spatial stream indication information. The spatial stream indication information indicates a number of radio frequency channels to be moved by a non-AP MLD to the first link, or indicates a number of spatial streams to be received by the non-AP MLD.

It can be learned that in this solution, the MU-RTS frame indicates, to the non-AP MLD, the number of spatial streams to be received by the non-AP MLD, or the number of radio frequency channels to be moved to the first link. In this way, the non-AP MLD has a capability of receiving more spatial streams, and the AP MLD can use more spatial streams to send data to the non-AP MLD on one link.

According to a tenth aspect, this application provides a multiple spatial stream communication method. The method includes: A non-AP MLD receives an MU-RTS frame on a first link, and moves, to the first link based on spatial stream indication information carried in the MU-RTS frame, a radio frequency channel that is of another link and indicated by the spatial stream indication information.

Optionally, the non-AP MLD is in an enhanced multi-link single radio (enhanced multi-link single radio, eMLSR) mode.

According to an eleventh aspect, this application further provides a communication apparatus, including a unit/module configured to perform the method in the ninth aspect or the tenth aspect.

According to a twelfth aspect, this application provides a control information transmission method, including: An AP MLD receives a data frame sent by a non-AP MLD, and generates and sends an M-BA frame on a first link. The M-BA frame carries control information. The control information indicates a status of another link other than the first link. In other words, the control information may indicate a network allocation vector on the another link other than the first link.

Optionally, the control information may be referred to as media state information (medium state information).

It can be seen that, in this solution, the status/NAV of the another link is carried in the M-BA frame, so that a non-STR non-AP MLD does not blindly perform channel contention on the another link, reducing power consumption of the non-AP MLD.

According to a thirteenth aspect, this application provides a control information transmission method, including: A non-AP MLD receives an M-BA frame on a first link. The M-BA frame carries control information. The control information indicates a status of another link other than the first link. The non-AP MLD sets a NAV on the another link based on the control information.

Optionally, the control information may be referred to as media state information (medium state information).

According to a fourteenth aspect, this application further provides a communication apparatus, including a unit/module configured to perform the method in the twelfth aspect or the thirteenth aspect.

According to a fifteenth aspect, this application provides a communication apparatus, which is specifically the AP MLD in the first aspect, and includes a processor and a transceiver. The processor is configured to generate a first frame. The first frame carries link indication information. The link indication information indicates one or more second links. The first frame indicates a non-AP MLD to enable the one or more second links. The transceiver is configured to send the first frame on a first link. Optionally, the AP MLD may further include a memory. The memory is configured to be coupled to the processor, and store program instructions and data that are necessary for the AP MLD.

According to a sixteenth aspect, this application provides a communication apparatus, which is specifically the non-AP MLD in the second aspect, and includes a processor and a transceiver. The transceiver is configured to receive a first frame on a first link. The first frame carries link indication information. The link indication information indicates one or more second links. The first frame indicates the non-AP MLD to enable the one or more second links. The processor is configured to enable the one or more second links based on the link indication information carried in the first frame. Optionally, the non-AP MLD may further include a memory. The memory is configured to be coupled to the processor, and store program instructions and data that are necessary for the non-AP MLD.

According to a seventeenth aspect, this application provides a communication apparatus, which is specifically the non-AP MLD in the fifth aspect, and includes a processor and a transceiver. The processor is configured to: after receiving a data frame on a first link, generate indication information, where the indication information indicates one or more second links. The transceiver is configured to send the indication information on the first link. Optionally, the non-AP MLD may further include a memory. The memory is configured to be coupled to the processor, and store program instructions and data that are necessary for the non-AP MLD.

According to an eighteenth aspect, this application provides a communication apparatus, which is specifically the AP MLD in the sixth aspect, and includes a transceiver. The transceiver is configured to: receive indication information on a first link, and send a data frame to a non-AP MLD on one or more second links indicated by the indication information. Optionally, the communication apparatus further includes a processor, configured to: generate and send the data frame to a non-AP MLD on the one or more second links indicated by the indication information. Optionally, the AP MLD may further include a memory. The memory is configured to be coupled to the processor, and store program instructions and data that are necessary for the AP MLD.

According to a nineteenth aspect, this application provides a chip or a chip system, including an interface circuit and a processing circuit. The interface circuit is configured to receive and transmit code instructions to the processing circuit. The processing circuit is configured to generate a first frame. The first frame carries link indication information. The link indication information indicates one or more second links. The first frame indicates a non-AP MLD to enable the one or more second links. The interface circuit is configured to send the first frame to a transceiver. The transceiver is configured to send the first frame on a first link.

In a possible design, the transceiver is configured to receive a first frame on the first link. The interface circuit is configured to receive the first frame from the transceiver. The first frame carries link indication information. The link indication information indicates one or more second links. The first frame indicates the non-AP MLD to enable the one or more second links. The processing circuit is configured to enable the one or more second links based on the link indication information carried in the first frame.

According to a twentieth aspect, this application provides a chip or a chip system, including an interface circuit and a processing circuit. The interface circuit is configured to receive and transmit code instructions to the processing circuit. The processing circuit is configured to: after receiving a data frame on a first link, generate indication information, where the indication information indicates one or more second links. The interface circuit is configured to send the indication information to a transceiver. The transceiver is configured to send the indication information on the first link.

In a possible design, the transceiver is configured to: receive indication information on the first link. The interface circuit is configured to receive the indication information from the transceiver and send a data frame to the transceiver. The transceiver is configured to: send the data frame to a non-AP MLD on one or more second links indicated by the indication information. Optionally, the processing circuit is configured to: generate the data frame, and perform channel contention on the one or more second links indicated by the indication information.

According to a twenty-first aspect, this application provides a computer-readable storage medium. The computer-readable storage medium stores instructions. When the instructions are run on a computer, the computer is enabled to perform the link indication method for multi-link communication according to the first aspect or the second aspect.

According to a twenty-second aspect, this application provides a computer-readable storage medium. The computer-readable storage medium stores instructions. When the instructions are run on a computer, the computer is enabled to perform the link indication method for multi-link communication according to the fifth aspect or the sixth aspect.

According to a twenty-third aspect, this application provides a computer program product that includes instructions, and when the product runs on a computer, the computer is enabled to perform the link indication method for multi-link communication according to the first aspect, the second aspect, the fifth aspect, or the sixth aspect.

According to a twenty-fourth aspect, this application provides a computer program product including instructions, and when the product runs on a computer, the computer is enabled to perform the multiple spatial stream communication method according to the ninth aspect or the tenth aspect.

According to a twenty-fifth aspect, this application provides a computer program product including instructions, and when the product runs on a computer, the computer is enabled to perform the multiple spatial stream communication method according to the twelfth aspect or the thirteenth aspect.

Embodiments of this application can quickly switch a communication mode of a non-AP MLD, reduce energy waste of the non-AP MLD, reduce power consumption, and obtain high-speed and low-latency data transmission experience.

### BRIEF DESCRIPTION OF DRAWINGS

To describe the technical solutions in embodiments of this application more clearly, the following briefly describes the accompanying drawings used for describing the embodiments.
FIG. 1 is a schematic diagram of communication between a non-AP MLD and an AP MLD according to an embodiment of this application;
FIG. 2 is a schematic diagram of an architecture of a wireless communication system according to an embodiment of this application;
FIG. 3a is a schematic diagram of a structure of a multi-link device according to an embodiment of this application;
FIG. 3b is a schematic diagram of another structure of a multi-link device according to an embodiment of this application;
FIG. 4 is a schematic flowchart of a link indication method for multi-link communication according to an embodiment of this application;
FIG. 5a is a schematic diagram of a time sequence of channel contention on a first link and a second link according to an embodiment of this application;
FIG. 5b is a schematic diagram of another time sequence of channel contention on a first link and a second link according to an embodiment of this application;
FIG. 5c is a schematic diagram of still another time sequence of channel contention on a first link and a second link according to an embodiment of this application;
FIG. 6 is a schematic diagram of a structure of a trigger frame according to an embodiment of this application;
FIG. 7a is a schematic diagram of a frame structure of a user information field according to an embodiment of this application;
FIG. 7b is a schematic diagram of another frame structure of a user information field according to an embodiment of this application;
FIG. 7c is a schematic diagram of a frame structure of a user information list field according to an embodiment of this application;
FIG. 8 is a schematic diagram of a frame structure of a MAC header according to an embodiment of this application;
FIG. 9 is a schematic diagram of a structure of a second frame according to an embodiment of this application;
FIG. 10 is a schematic diagram a frame structure of a second frame that carries first duration according to an embodiment of this application;
FIG. 11a is a schematic diagram of a frame structure of a link information field according to an embodiment of this application;
FIG. 11b is a schematic diagram of a frame structure of a link identifier bitmap according to an embodiment of this application;
FIG. 12 is another schematic flowchart of a link indication method for multi-link communication according to an embodiment of this application;
FIG. 13 is a schematic diagram of a frame structure of an M-BA frame according to an embodiment of this application;
FIG. 14 is a schematic diagram of a frame structure of a control segment field in an M-BA frame according to an embodiment of this application;
FIG. 15 is a schematic diagram of a frame structure of an A-control field in a control segment field according to an embodiment of this application;
FIG. 16 is a schematic diagram of a frame structure of a control segment field that carries indication information according to an embodiment of this application;
FIG. 17 is a schematic diagram of a frame structure of an A-control field carrying MSI in an M-BA frame according to an embodiment of this application;
FIG. 18 is a schematic diagram of a structure of a communication apparatus 1 according to an embodiment of this application;
FIG. 19 is a schematic diagram of a structure of a communication apparatus 2 according to an embodiment of this application; and
FIG. 20 is a schematic diagram of a structure of a communication apparatus 1000 according to an embodiment of this application.

### DESCRIPTION OF EMBODIMENTS

The following clearly and completely describes the technical solutions in embodiments of this application with reference to the accompanying drawings in embodiments of this application.

For ease of understanding a link indication method for multi-link communication provided in embodiments of this application, the following describes a system architecture or an application scenario of the link indication method for multi-link communication provided in embodiments of this application. It may be understood that the system architecture and/or the application scenario described in embodiments of this application are/is intended to describe the technical solutions in embodiments of this application more clearly, and do/does not constitute a limitation on the technical solutions provided in embodiments of this application.

Embodiments of this application provide a link indication method for multi-link communication, to quickly switch a communication mode of a non-AP MLD, reduce energy waste of the non-AP MLD, reduce power consumption, and obtain high-speed and low-latency data transmission experience. The link indication method for multi-link communication may be implemented by a communication device in a wireless communication system or a chip or a processor in a communication device. The communication device may be a wireless communication device that supports concurrent transmission on a plurality of links. For example, the communication device may be referred to as a multi-link device (multi-link device, MLD) or a multi-band device. Compared with a communication device that supports only single-link transmission, the multi-link device has higher transmission efficiency and a larger throughput rate.

The multi-link device includes one or more affiliated stations (affiliated STA). The affiliated station is a logical station and may work on a link, a frequency band, or a channel. The affiliated station may be an access point (access point, AP) or a non-access point station (non-access point station, non-AP STA). For ease of description, in this application, a multi-link device whose affiliated station is an AP is referred to as a multi-link AP, a multi-link AP device, or an AP multi-link device (AP multi-link device, AP MLD), and a multi-link device whose affiliated station is a non-AP STA is referred to as a multi-link non-AP, a multi-link non-AP device, or a non-AP multi-link device (non-AP multi-link device, non-AP MLD).

Optionally, a multi-link device may include a plurality of logical stations. Each logical station works on a link, but the plurality of logical stations are allowed to work on a same link. During data transmission between an AP MLD and a non-AP MLD, a link identifier may be used to identify a link or a station on a link. Before communication, the AP MLD and the non-AP MLD may first negotiate or communicate for a correspondence between a link identifier and a link or a station on a link. Therefore, during data transmission, the link identifier is carried without transmitting a large amount of signaling information to indicate the link or the station on the link. This reduces signaling overheads and improves transmission efficiency.

In an example, a management frame, for example, a beacon (beacon) frame, sent by the AP MLD when establishing a basic service set (basic service set, BSS) carries one element, and the element includes a plurality of link identifier information fields. The link identifier information field may indicate a correspondence between a link identifier and a station that operates on a link corresponding to the link identifier. The link identifier information field includes a link identifier, and includes one or more pieces of the following information: a medium access control (medium access control, MAC) address, an operating class, and a channel number. One or more of the MAC address, the operating class, and the channel number may indicate one link. For an AP, a MAC address of the AP is a basic service set identifier (basic service set identifier, BSSID) of the AP. In another example, in an association process between multi-link devices, an AP MLD and a non-AP MLD negotiate for a plurality of link identifier information fields. Multi-link association refers to one association between an AP of the AP MLD and a STA of the non-AP MLD. The association may facilitate separate association between a plurality of STAs of the non-AP MLD and a plurality of APs of the AP MLD, where one STA is associated with one AP.

In subsequent communication, a link identifier is used by the AP MLD or the non-AP MLD to represent a station of the non-AP MLD, and the link identifier may further represent one or more attributes of a MAC address, an operating class, and a channel number of the station. The MAC address of the station may be replaced with an association identifier of the station after the non-AP MLD is associated with the AP MLD. Optionally, if a plurality of stations operate on one link, a link identifier (which is one ID) represents an operating class and a channel number of the link, and also represents an identifier of a station operating on the link, for example, a MAC address of the station or an association identifier (association identifier, AID) of the station.

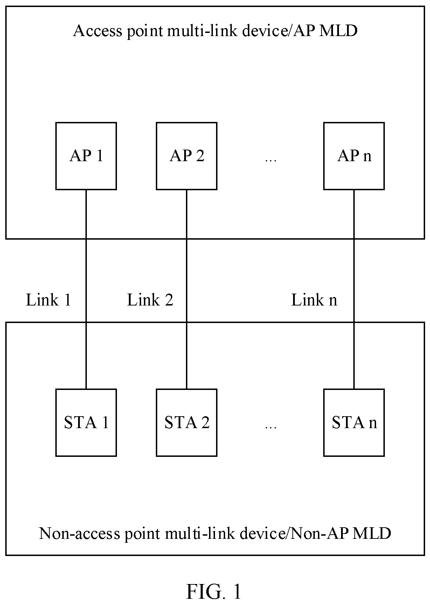

Optionally, one or more STAs in the non-AP MLD may establish an association relationship with and then communicate with one or more APs in the AP MLD. FIG. 1 is a schematic diagram of communication between a non-AP MLD and an AP MLD according to an embodiment of this application. As shown in FIG. 1, the AP MLD includes an AP 1, an AP 2, ..., and an AP n. The non-AP MLD includes a STA 1, a STA 2, ..., and a STA n. The AP MLD may concurrently communicate with the non-AP MLD on a link 1, a link 2, ..., and a link n. The STA 1 in the non-AP MLD establishes an association relationship with the AP 1 in the AP MLD. The STA 2 in the non-AP MLD establishes an association relationship with the AP 2 in the AP MLD. The STA n in the non-AP MLD establishes an association relationship with the AP n in the AP MLD.

Optionally, the multi-link device may implement wireless communication in compliance with the IEEE 802.11 series protocols. For example, a station in compliance with the extremely high throughput (extremely high throughput, EHT), a station in compliance with IEEE 802.11be or is compatible with IEEE 802.11be implements communication with another device.

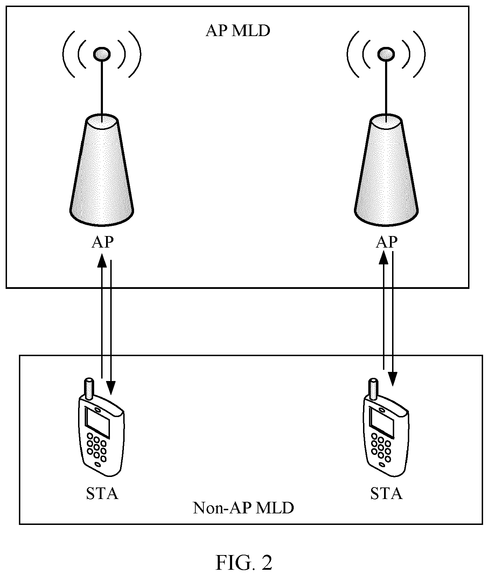

The link indication method for multi-link communication provided in this embodiment of this application may be applied to a wireless local area network (wireless local area network, WLAN). FIG. 2 is a schematic diagram of an architecture of a wireless communication system according to an embodiment of this application. As shown in FIG. 2, the wireless communication system includes at least one AP MLD and at least one non-AP MLD. The AP MLD is a multi-link device that provides a service for the non-AP MLD, and the non-AP MLD may communicate with the AP MLD on a plurality of links. An AP in the AP MLD may communicate with a STA in the non-AP MLD on a link. It may be understood that quantities of the AP MLDs and the non-AP MLDs in FIG. 2 are only an example.

For example, a multi-link device (which may be a non-AP MLD or an AP MLD herein) is an apparatus having a wireless communication function. The apparatus may be an entire system device, or may be a chip, a processing system, or the like installed in an entire system device. A device in which the chip or the processing system is installed may implement the method and the function in embodiments of this application under the control of the chip or the processing system. For example, the non-AP multi-link device in embodiments of this application has a wireless transceiver function, may support the 802.11 series protocols, and may communicate with the AP multi-link device or another non-AP multi-link device. For example, the non-AP multi-link device is any user communication device that allows a user to communicate with an AP and then communicate with a WLAN. For example, the non-AP multi-link device may be user equipment that can be connected to a network, such as a tablet computer, a desktop computer, a laptop computer, a notebook computer, an ultra-mobile personal computer (ultra-mobile personal computer, UMPC), a handheld computer, a netbook, a personal digital assistant (personal digital assistant, PDA), or a mobile phone, may be an internet of things node in the internet of things, or may be a vehicle-mounted communication apparatus in the internet of vehicles. The non-AP multi-link device may alternatively be a chip and a processing system in the foregoing terminals. The AP multi-link device may be an apparatus that provides a service for the non-AP multi-link device, and may support the 802.11 series protocols. For example, the AP multi-link device may be a communication entity such as a communication server, a router, a switch, or a bridge, or the AP multi-link device may include various forms of macro base stations, micro base stations, relay stations, and the like. Certainly, the AP multi-link device may alternatively be chips and processing systems in the various forms of devices. The 802.11 protocol may be a protocol that supports the 802.11be or is compatible with the 802.11be.

It may be understood that the multi-link device may support high-rate and low-latency transmission. With continuous evolution of application scenarios of a wireless local area network, the multi-link device may be further applied to more scenarios, for example, a sensor node (such as a smart meter, a smart electricity meter, and a smart air detection node) in smart city, a smart device (such as a smart camera, a projector, a display, a television, a stereo, a refrigerator, and a washing machine) in smart home, a node in the internet of things, an entertainment terminal (such as AR, VR, or other wearable devices), a smart device (such as a printer and a projector) in smart office, an internet of vehicles device in the internet of vehicles, and some infrastructures (vehicles a vending machine, a self-service navigation station of a supermarket, a self-service cash register device, and a self-service ordering machine) in daily life scenarios. A specific form of the multi-link device is not limited in embodiments of this application, and is only an example for description herein.

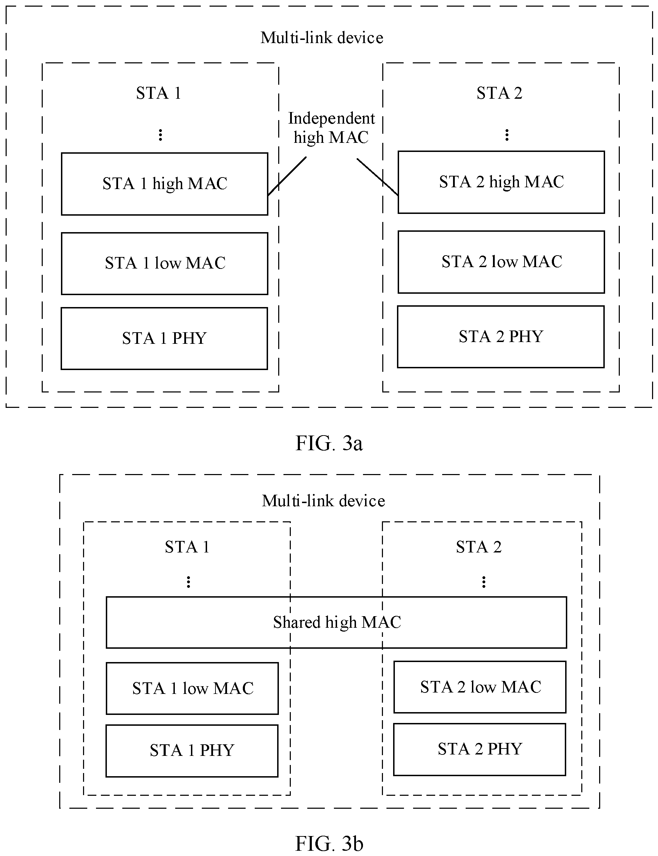

Optionally, FIG. 3a is a schematic diagram of a structure of a multi-link device according to an embodiment of this application. The IEEE 802.11 standard focuses on an 802.11 physical layer (physical layer, PHY) part and a medium access control (medium access control, MAC) layer part in a multi-link device. As shown in FIG. 3a, a plurality of STAs included in the multi-link device are independent of each other at a low MAC (low MAC) layer and a PHY layer, and are also independent of each other at a high MAC (high MAC) layer. FIG. 3b is a schematic diagram of another structure of a multi-link device according to an embodiment of this application. As shown in FIG. 3b, a plurality of STAs included in the multi-link device are independent of each other at a low MAC (low MAC) layer and a PHY layer, and share a high MAC (high MAC) layer. Certainly, a non-AP multi-link device may use a structure with high MAC layers independent of each other, or may use a structure with a shared high MAC layer. Similarly, an AP multi-link device may use a structure with a shared high MAC layer, or may use a structure with high MAC layers independent of each other. A schematic diagram of an internal structure of the multi-link device is not limited in this embodiment of this application. FIG. 3a and FIG. 3b are only examples for description. For example, the high MAC layer or the low MAC layer may be implemented by one processor in a chip system of the multi-link device, or may be implemented by different processing modules in a chip system.

For example, the multi-link device in this embodiment of this application may be a single-antenna device, or may be a multi-antenna device. For example, the multi-link device may be a device with more than two antennas. The number of antennas included in the multi-link device is not limited in embodiments of this application. In this embodiment of this application, the multi-link device may allow traffic of a same access category (access category, AC) to be transmitted on different links, or even allow same data packets to be transmitted on different links. Alternatively, the multi-link device may not allow traffic of a same access category to be transmitted on different links, but may allow traffic of different access categories to be transmitted on different links.

A frequency band in which the multi-link device operates may include one or more frequency bands of sub 1 GHz, 2.4 GHz, 5 GHz, 6 GHz, and high frequency 60 GHz.

In the 802.11 protocol, a STA generally has two working modes: a non-power-saving mode and a power-saving mode. When the STA works in the non-power-saving mode, the STA is in an active state (active state, which may also be referred to as an awake state) regardless of whether there is to-be-transmitted data on the STA. When the STA works in the power-saving mode, the STA may be in an active state (active state) when transmitting data with an AP. When there is no data transmission between the STA and the AP, the STA may be in a doze state (doze state) to reduce power consumption. The STA may send a frame to the AP to notify whether the STA is in the power-saving mode. If a power-saving bit in a frame control field (frame control field) in a MAC header of the frame is set to 1, the AP is notified that the STA is in the power-saving mode. If the power-saving bit in the frame control field (frame control field) in the MAC header of the frame is set to 0, the AP is notified that the STA is in the non-power-saving mode.

It may be understood that "data transmission" and "transmitting data" mentioned in this application generally mean communication. "Data" generally means communication information, and is not limited to data information, or may be signaling information or the like. "Transmission" generally means sending and receiving.

In the multi-link device, to reduce power consumption, a non-AP MLD may work in a "multi-link spatial multiplexing power save mode". After the non-AP MLD enters the multi-link spatial multiplexing power save mode, only one link may be enabled in an idle state, and another link is in a doze state (doze state) or a disabled state (link is disabled). In addition, only one radio frequency channel may be enabled on the enabled link to receive a single spatial stream. When a data frame arrives, the non-AP MLD may enable a plurality of links and a plurality of radio frequency channels on each link, so that the AP MLD may send the data frame to the non-AP MLD by using a plurality of spatial streams on the plurality of links.

The non-AP MLD automatically enables all links after receiving the data frame from the AP MLD on one enabled link. In addition, before sending data, a device in a wireless communication system needs to first perform channel contention, and can send data only after successful channel contention. Therefore, the AP MLD may not obtain a channel through contention on another link in a timely manner, and may not send data to the non-AP MLD on the another link in a timely manner. Consequently, after the non-AP MLD enables the another link, waiting time is long, and power consumption is high. In addition, the AP MLD may not schedule the data to some links for transmission. Even if the non-AP MLD enables all the links, AP MLD may not send the data frame to the non-AP MLD on the some links. Therefore, if the non-AP MLD blindly enables all the links, energy of the non-AP MLD is wasted.

It may be understood that "enabling a link" mentioned in this application may be understood as a status of the link changes (from a doze state/disabled state) into an active state/enabled state. Alternatively, it may be understood that the non-AP MLD cannot send or receive data on the link before the link is enabled, and can send or receive the data on the link only after the link is enabled.

Embodiments of this application provide a link indication method for multi-link communication. The AP MLD directly indicates the non-AP MLD to enable a specific link or the non-AP MLD notifies the AP MLD of a specific enabled link. This can quickly switch a communication mode of a non-AP MLD, reduce energy waste of the non-AP MLD, reduce power consumption, and obtain high-speed and low-latency data transmission experience.

The following describes in detail the technical solutions provided in this application with reference to more accompanying drawings.

The technical solutions provided in this application are described from two different perspectives. Embodiment 1 describes, from a perspective of the AP MLD, how the AP MLD indicates the non-AP MLD to enable the specific link. Embodiment 2 describes, from a perspective of the non-AP MLD, how the non-AP MLD notifies the AP MLD of the specific link that has been enabled by the non-AP MLD.

### Embodiment 1

Embodiment 1 of this application describes how an AP MLD indicates a non-AP MLD to enable a specific link, so that the non-AP MLD enables a corresponding link based on the indication. This can reduce energy waste due to blind enabling of all links by the non-AP MLD, reduce power consumption, and obtain high-speed and low-latency data transmission experience.

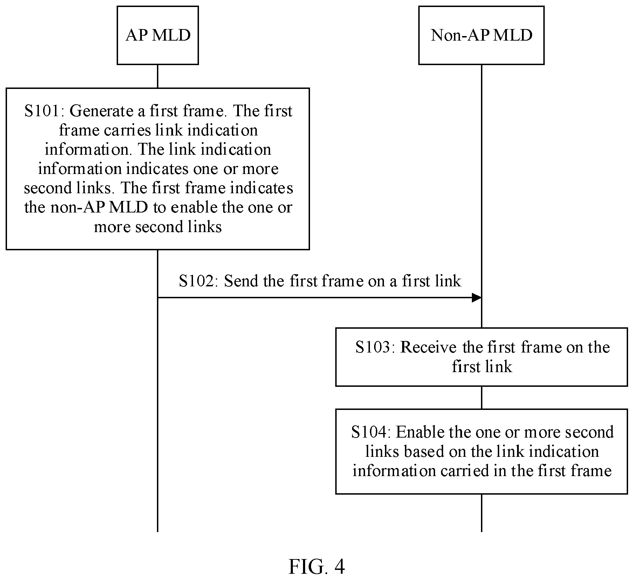

FIG. 4 is a schematic flowchart of a link indication method for multi-link communication according to an embodiment of this application. In the link indication method for multi-link communication, a non-AP MLD and an AP MLD have established a multi-link association. As shown in FIG. 4, the link indication method for multi-link communication includes but is not limited to the following steps.

S101: The AP MLD generates a first frame. The first frame carries link indication information. The link indication information indicates one or more second links. The first frame indicates the non-AP MLD to enable the one or more second links.

S102: The AP MLD sends the first frame on a first link.

The first frame carries the link indication information. The link indication information indicates the one or more second links. The second link is in a doze state/disabled state. The first frame may indicate the non-AP MLD to enable the one or more second links. In other words, the first frame may indicate the non-AP MLD to enable a specific link after receiving the first frame.

Optionally, the link indication information may include a link identifier of the second link, and may further include a number of spatial streams of the second link. It can be learned that the link indication information includes the link identifier of the second link and the number of spatial streams of the second link. In this way, when enabling the second link, the non-AP MLD can enable a corresponding number of spatial streams. This helps use multiple spatial streams for communication and improves communication efficiency.

Specifically, the AP MLD may determine the first link and the one or more second links. The AP MLD may perform channel contention on the first link and the one or more second links. The AP MLD may generate the first frame. After a backoff counter on the first link backs off to 0, the AP MLD sends the first frame to the non-AP MLD on the first link. The first link is a link currently enabled/used by the non-AP MLD, or a link enabled by the non-AP MLD in a multi-link spatial multiplexing power save mode. The first link is in an active state (active state)/enabled state (link is enabled). The first link and the second link are different links in a plurality of links on which the AP MLD and the non-AP MLD establish the multi-link association. The AP MLD may send the first frame on the first link by using a single spatial stream.

Optionally, the AP MLD may determine the second link in two manners. In a first manner, the AP MLD may select, based on a load status of each of N links associated with the AP MLD and the non-AP MLD, a specific link to send data to the non-AP MLD. The one or more second links may be obtained by using a link selected from the N links as the second link. For example, the AP MLD may select a link with a light load as the second link, to obtain a channel through contention in short time. It may be understood that "link with a light load" may be understood as that a number of devices that simultaneously/concurrently perform channel contention on the link is less than a specific value, or may be understood as that a communication frequency (or a busy frequency, or an occupied frequency of the link) on the link is less than a specific value. It may be understood that the second link is selected from N links associated with the AP MLD and the non-AP MLD, in other words, the N links may include the first link. However, when determining the second link, the AP MLD may not consider the first link, where N herein is an integer greater than or equal to 2. Alternatively, the second link is selected from N links associated with the AP MLD and the non-AP MLD other than the first link, in other words, the N links may not include the first link, where N herein may be an integer greater than or equal to 1.

In a second manner, the AP MLD may select, based on a busy degree of each of N links associated with the AP MLD and the non-AP MLD, a specific link to send data to the non-AP MLD when the backoff counter on the first link is about to back off to 0. In an implementation, when the backoff counter on the first link is about to back off to 0, the AP MLD may detect a status of each link. If the AP MLD detects that a specific link is in a backoff stage, and the AP MLD may predict that a backoff counter on the link is about to back off to 0 in short time (for example, a value of a backoff counter during channel contention by the AP MLD on the link is less than or equal to a preset threshold), the link may be used as the second link, and information about the second link is carried in the link indication information. Alternatively, if the AP MLD detects that a backoff counter on a specific link has backed off to 0, the link may be used as the second link, and information about the second link is carried in the link indication information. If the AP MLD detects that a specific link is busy and may be busy for long time (for example, if a length of a packet received by the AP MLD on the link is greater than or equal to a preset threshold, it is considered that the link may be busy for long time), the link cannot be used as the second link.

In another implementation, the AP MLD may determine a busy degree of each link based on a length of a data packet received on the link, or a NAV indicated by a duration (duration) field in a frame received on the link. If a specific link is busy only for short time, for example, a length of a data packet received on the link is less than or equal to a first preset length, or a NAV value indicated by a duration field in a frame received on the link is less than or equal to a first preset value, the link may be used as the second link, and information about the second link is carried in the link indication information. If it is estimated that a specific link is to be busy for long time, for example, a length of a data packet received on the link is greater than or equal to a second preset length, or a NAV value indicated by a duration field in a frame received on the link is greater than or equal to a second preset value, the link cannot be used as the second link. The first preset length and the second preset length may be the same or may be different. Similarly, the first preset value and the second preset value may be the same or may be different.

It may be understood that the network allocation vector (network allocation vector, NAV) may be understood as a countdown timer, and gradually decreases as time elapses. When the NAV counts down to 0, it is considered that a medium is in an idle state. Specifically, after a station receives a frame, if a receiver address of the frame is not the station, the station may update a NAV based on a duration (duration) field in the received frame. If the receiver address of the frame is the station, it indicates that the station is a receive station and may not update the NAV. Before the NAV is updated, it may be further determined whether a value of the duration field in the current frame is greater than a current NAV value of the station. If the value is greater than the current NAV value, the NAV is updated. On the contrary, if the value is less than or equal to the current NAV value, the NAV is not updated. The NAV value starts from an end moment of the received frame.

It may be understood that, only when the AP MLD expects to send a data frame to the non-AP MLD on a specific link (or the AP MLD expects to initiate channel contention on a specific link), the AP MLD indicates the link in the link indication information. Otherwise, even if a link is idle, the AP MLD does not indicate the link.

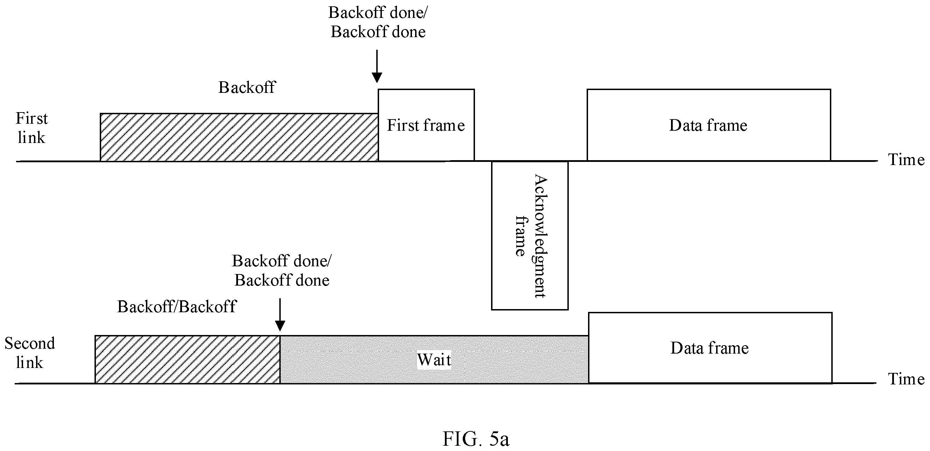

Optionally, if the AP MLD simultaneously/concurrently performs channel contention on the first link and the one or more second links, backoff counters of the first link and the second link may non-simultaneously/non-synchronously back off to 0. The following is described with reference to the accompanying drawings. For ease of description, only one second link is used as an example in the following figures (namely, FIG. 5a to FIG. 5c). FIG. 5a is a schematic diagram of a time sequence of channel contention on a first link and a second link according to an embodiment of this application. FIG. 5a shows a case in which the second link backs off to 0 before the first link. As shown in FIG. 5a, before a backoff counter of an AP MLD on the first link backs off to 0, a backoff counter of the AP MLD on the second link backs off to 0. The AP MLD may not send after the backoff counter on the second link backs off to 0, to be specific, suspend (suspend) the second link. After the backoff counter on the first link backs off to 0, the AP MLD sends a first frame on the first link. The first frame carries link indication information. The link indication information indicates one or more second links. When a preset time period (for example, a short inter-frame space (short inter-frame space, SIFS)) elapses after the AP MLD receives an acknowledgment frame of the first frame, the AP MLD stops waiting or cancels suspension of the second link, and concurrently sends a data frame on the first link and the second link. Optionally, the AP MLD may send the first frame on the first link by using a single spatial stream.

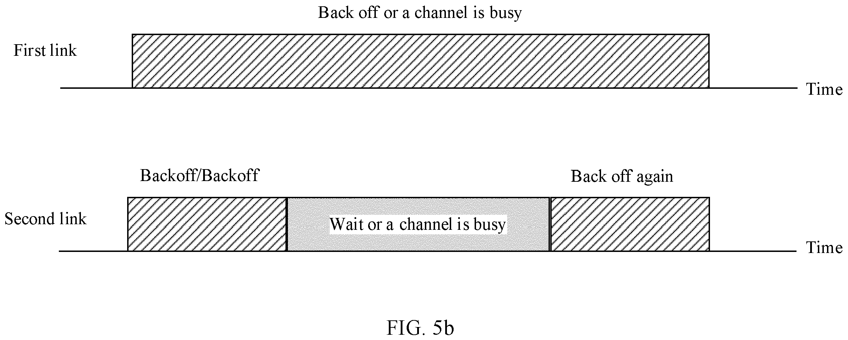

FIG. 5b is a schematic diagram of another time sequence of channel contention on a first link and a second link according to an embodiment of this application. FIG. 5b shows a case in which the first link is busy for long time during a suspension/waiting process of the second link when the second link backs off to 0 before the first link. As shown in FIG. 5b, a backoff counter on the second link backs off to 0 before a backoff counter on the first link, and the second link enters the suspension/waiting process. If the first link is busy for long time in the suspension/waiting of the second link, an AP MLD may give up waiting on the second link, or cancel suspension of the second link. Then, if the AP MLD wants to send data on the second link, the AP MLD needs to re-initiate channel contention on the second link, and re-perform a random access backoff process. In a process of re-initiating channel contention, a size of a contention window (contention window, CW) remains unchanged, in other words, the size of the contention window is the same as that of a contention window in previous channel contention.

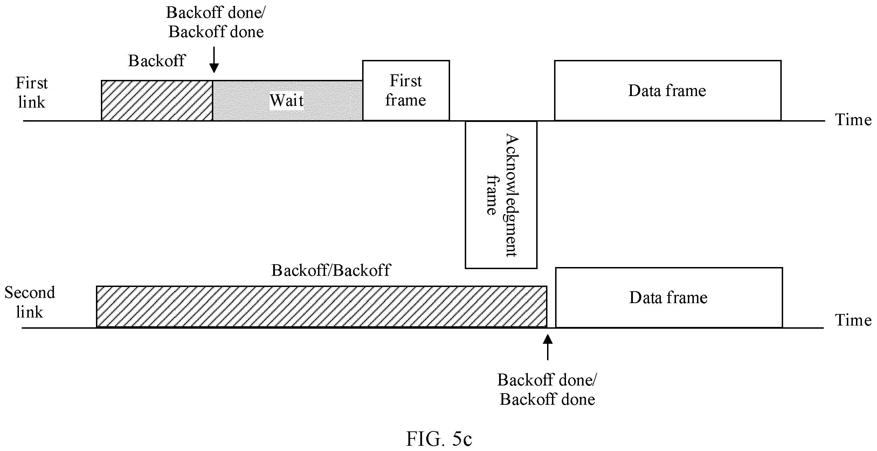

FIG. 5c is a schematic diagram of still another time sequence of channel contention on a first link and a second link according to an embodiment of this application. FIG. 5c shows a case in which the first link backs off to 0 before the second link. As shown in FIG. 5c, when a backoff counter of an AP MLD on the first link backs off to 0, a backoff counter of the AP MLD on the second link does not back off to 0. The AP MLD may directly send a first frame on the first link. Alternatively, the AP MLD may temporarily not send the first frame on the first link, to be specific, suspend the first link, and send the first frame on the first link after the backoff counter on the second link backs off to 0. Alternatively, the AP MLD may temporarily not send the first frame on the first link, to be specific, suspend the first link, and send the first frame on the first link when the backoff counter on the second link is about to back off to 0. "Being about to back off to 0" may be understood as that a value of the backoff counter backs off to 0 after time T, and a value of the time T may be less than or equal to a sum of a length of the first frame (a time length herein), a length of an acknowledgment frame of the first frame (still a time length herein), and two SIFSs, in other words, the value of the time T ≤ the length of the first frame + the length of the acknowledgment frame of the first frame + 2 x SIFS.

If the first link backs off to 0 before the second link, and the second link is busy for long time in a waiting/suspension process of the first link, the AP MLD may give up waiting on the first link, or cancel suspension of the first link. Then, if the AP MLD wants to send data on the first link, the AP MLD needs to re-initiate channel contention on the second link, and re-perform a random access backoff process. In a process of re-initiating channel contention, a size of a contention window remains unchanged, in other words, the size of the contention window is the same as that of a contention window in previous channel contention.

Optionally, the first frame may be a multi-user request to send (multi-user request to send, MU-RTS) frame, or a data frame, or a new type of frame. The following separately describes manners of carrying link indication information when the first frame is different frames.

### (1) The first frame is an MU-RTS frame

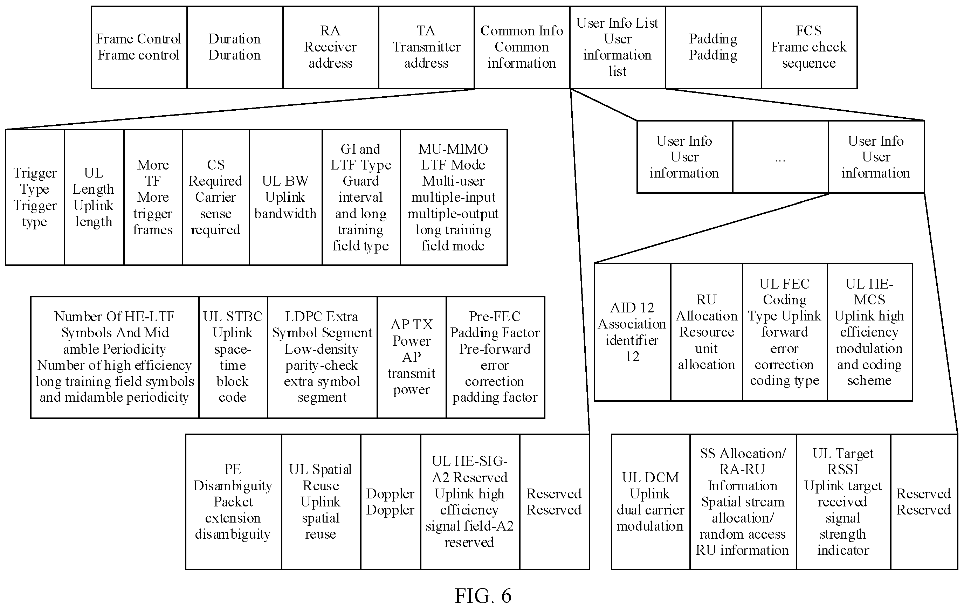

Specifically, the first frame may be an MU-RTS frame. The MU-RTS frame is a type of trigger frame (trigger frame). The MU-RTS frame is used to protect a channel, so that a surrounding irrelevant station ("surrounding irrelevant station" means a station that is not a receiver address of the MU-RTS frame) updates a NAV In this embodiment of this application, the MU-RTS frame further indicates the non-AP MLD to enable the one or more second links. FIG. 6 is a schematic diagram of a structure of a trigger frame according to an embodiment of this application. As shown in FIG. 6, when a value of a trigger type (trigger type) field in a trigger frame is 3, it indicates that the trigger frame is an MU-RTS frame. For the MU-RTS frame, the following fields in a common information (common information) field are reserved fields (in other words, the following fields are not used in the MU-RTS frame): an uplink length (UL Length), a guard interval (guard interval, GI) and long training field (long training field, LTF) type (GI And LTF Type), a multi-user multiple-input multiple-output long training field mode (MU-MIMO LTF Mode), a number of high efficiency (high efficiency, HE) long training field symbols and midamble periodicity (Number Of HE-LTF Symbols And Midamble Periodicity), an uplink space-time block coding (space-time block coding, STBC), a low-density parity-check (low-density parity-check, LDPC) extra symbol segment (LDPC Extra Symbol Segment), and an AP transmit power (AP TX Power), a pre-forward error correction (Forward Error Correction, FEC) padding factor (Pre-FEC Padding Factor), a packet extension disambiguity (PE Disambiguity), an uplink spatial reuse (UL Spatial Reuse), a Doppler (Doppler), and an uplink high efficiency signal field-A2 reserved (UL HE-SIG-A2 Reserved).

The following fields in a user information (user information) field are reserved fields (in other words, the following fields are not used in the MU-RTS frame in the current standard protocol 802. 11ax): an uplink high efficiency modulation and coding scheme (UL HE-MCS), an uplink forward error correction coding type (UL FEC Coding Type), an uplink dual carrier modulation (dual carrier modulation, UL DCM), a synchronization offset (spread spectrum, SS) allocation/random access resource unit (resource unit, RU) information (SS allocation/RA-RU Information), and an uplink target received signal strength indicator (UL Target RSSI).

In a first implementation, the link indication information is carried in a user information field in the MU-RTS frame (namely, the first frame). The user information field may include a link information field or a link identifier bitmap. The link information field or the link identifier bitmap carries the link indication information. The user information field may further include an AID 12 field and a real AID field. The AID 12 field does not indicate a real AID, but indicates another meaning. For example, the AID 12 field may indicate that the user information field includes ("include" herein may be replaced with "has") the link information field or the link identifier bitmap. The real AID field indicates an AID of a non-AP MLD.

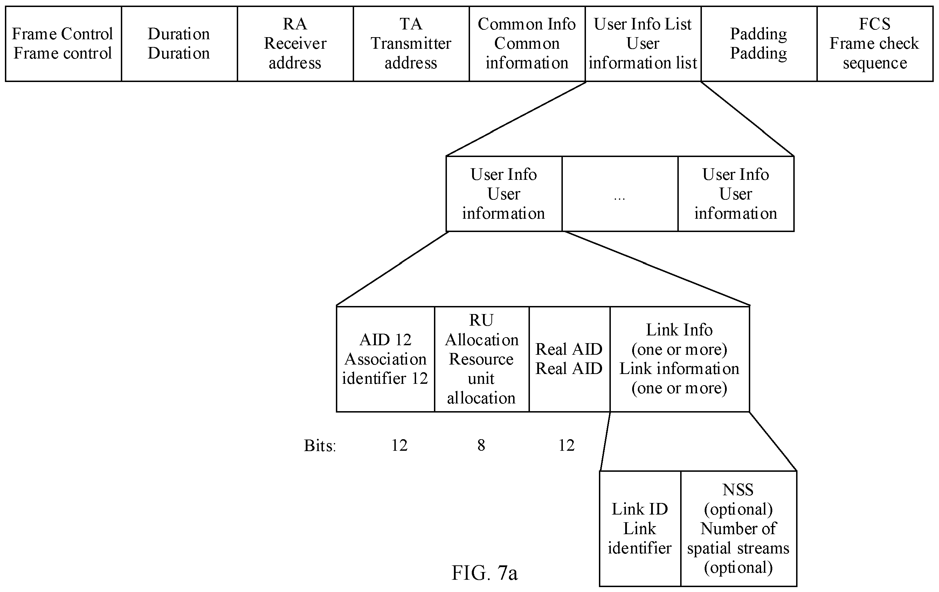

FIG. 7a is a schematic diagram of a frame structure of the user information field according to an embodiment of this application. As shown in FIG. 7a, the user information field may include an AID 12 field, a resource unit allocation (RU allocation) field, a real AID (real AID) field, and one or more link information (link information) fields. One link information field may indicate information about one link. In an example, the AID 12 field and the real AID field are 12 bits in length, the RU allocation field is 8 bits in length, and the link information field is not limited in length. A value of the AID 12 field is set to a preset value, for example, a value in a range [2008, 2047], to indicate that the user information field is redefined, or indicate that the user information field includes the link information field, or indicate that the link information field exists in the user information field. The RU allocation field indicates a specific RU location allocated to a non-AP MLD. The real AID field indicates a real AID of the non-AP MLD. The link information field indicates information about a link that the AP MLD requests the non-AP MLD to enable, to be specific, indicate the one or more second links. Each link information field may include a link identifier (link ID). Optionally, the link information field may further include a number of spatial streams (number of spatial streams, NSS) that the AP MLD requests the non-AP MLD to enable on a link indicated by the link identifier. The link information field in FIG. 7a may be a link identifier bitmap, namely, a link ID bitmap.

It may be understood that FIG. 7a is only an example. In this embodiment of this application, a sequence of fields in the user information field may be arranged in another manner. For example, the real AID field is before the RU allocation field, and a sequence of other fields remains unchanged. A number of bits occupied by each field in the user information field may also be adjusted based on a requirement. This is not limited in this embodiment of this application.

In a second implementation, the link indication information is carried in a user information field in the MU-RTS frame (namely, the first frame). A reserved bit (reserved bit) in the user information field indicates that the user information field includes ("include" herein may be replaced with "has") the link information field or the link identifier bitmap. Alternatively, in other words, the reserved bit in the user information field carries indication information, to indicate that the user information field is redefined. The link information field or the link identifier bitmap carries the link indication information.

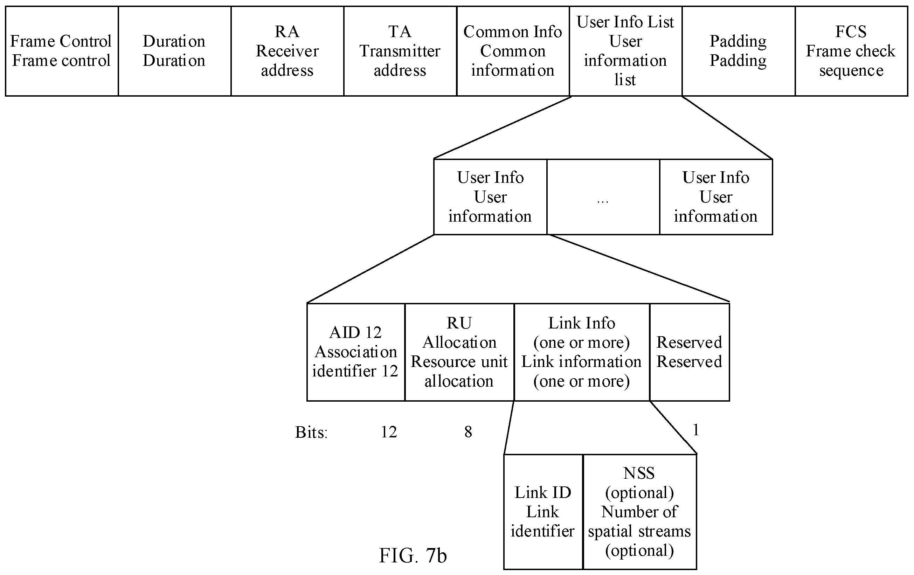

FIG. 7b is a schematic diagram of another frame structure of the user information field according to an embodiment of this application. As shown in FIG. 7b, the user information field may include an AID 12 field, a resource unit allocation (RU allocation) field, one or more link information fields, and a reserved field. One link information field may indicate information about one link. In an example, the AID 12 field is 12 bits in length, the RU allocation field is 8 bits in length, the reserved field is 1 bit in length, and the link information field is not limited in length. The AID 12 field indicates a real AID of the non-AP MLD. The RU allocation field indicates a specific RU location allocated to the non-AP MLD. The link information field indicates information about a link that the AP MLD requests the non-AP MLD to enable, to be specific, indicate the one or more second links. Each link information field may include a link identifier (link ID). Optionally, the link information field may further include a number of spatial streams that the AP MLD requests the non-AP MLD to enable on a link indicated by the link identifier. The link information field in FIG. 7b may be a link identifier bitmap, namely, a link ID bitmap.

The reserved field does not indicate reserved, but indicates another meaning. For example, the reserved field indicates that the user information field is redefined, or indicate that the user information field includes one or more link information fields, or indicate that the link information field exists in the user information field. For example, when a value of the reserved field is 1, it indicates that the user information field is redefined, or it indicates that the user information field includes the one or more link information fields. When a value of the reserved field is 0, it indicates that the user information field is not redefined, or it indicates that the user information field does not include the link information field/the link information field does not exist in the user information field, and the reserved field still indicates reserved. A mapping relationship between the value and the meaning of the reserved field is not limited in this embodiment of this application. Alternatively, when the value is 0, it indicates that the user information field is redefined; or when the value is 1, it indicates that the user information field is not redefined, and the reserved field still indicates reserved.

It may be understood that FIG. 7b is only an example. In this embodiment of this application, a sequence of fields in the user information field may be arranged in another manner. For example, the link information field is after the reserved field, and a sequence of other fields remains unchanged. A number of bits occupied by each field in the user information field may also be adjusted based on a requirement. This is not limited in this embodiment of this application.

In a third implementation, information sent to the non-AP MLD is carried in two user information fields in the MU-RTS frame (namely, the first frame). In other words, in the MU-RTS frame, the non-AP MLD corresponds to two user information fields: a first user information field and a second user information field. The link indication information may be carried in a link information field or a link identifier bitmap in the second user information field. The second user information field further includes an AID 12 field. The AID 12 field in the second user information field does not indicate a real AID, but indicates another meaning. For example, the AID 12 field may indicate that the second user information field includes the link information field or the link identifier bitmap. In other words, the AID 12 field in the second user information field indicates that the second user information field is redefined. The first user information field indicates the non-AP MLD to transmit resource scheduling information for a clear to send (clear to send) CTS frame.

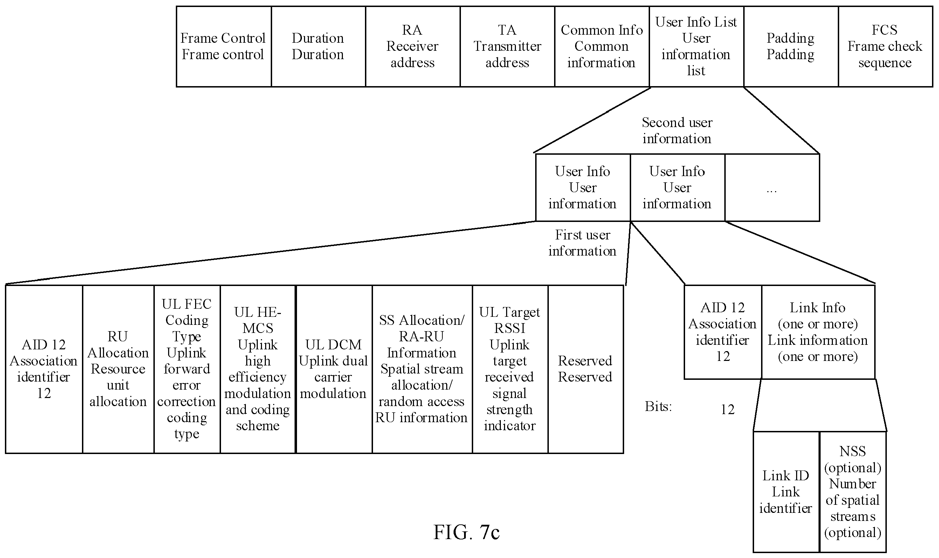

FIG. 7c is a schematic diagram of a frame structure of a user information list field according to an embodiment of this application. As shown in FIG. 7c, the user information list (user information list) field may include two user information fields corresponding to the non-AP MLD. The first user information field in FIG. 7c is referred to as a first user information field, and the second user information field in FIG. 7c is referred to as a second user information field. The second user information field includes an AID 12 field and one or more link information fields. One link information field may indicate information about one link. A value of the AID 12 field of the second user information field is set to a preset value, for example, a value in a range [2008, 2047], or is set to the same value as that of an AID 12 field in the first user information field, to indicate that the second user information field is redefined, or indicate that the second user information field includes the one or more link information fields. The link information field indicates information about a link that the AP MLD requests the non-AP MLD to enable, to be specific, indicate the one or more second links. Each link information field may include a link identifier (link ID). Optionally, the link information field may further include a number of spatial streams that the AP MLD requests the non-AP MLD to enable on a link indicated by the link identifier. The link information field in FIG. 7c may be a link identifier bitmap, namely, a link ID bitmap.

### (2) The first frame is a data frame

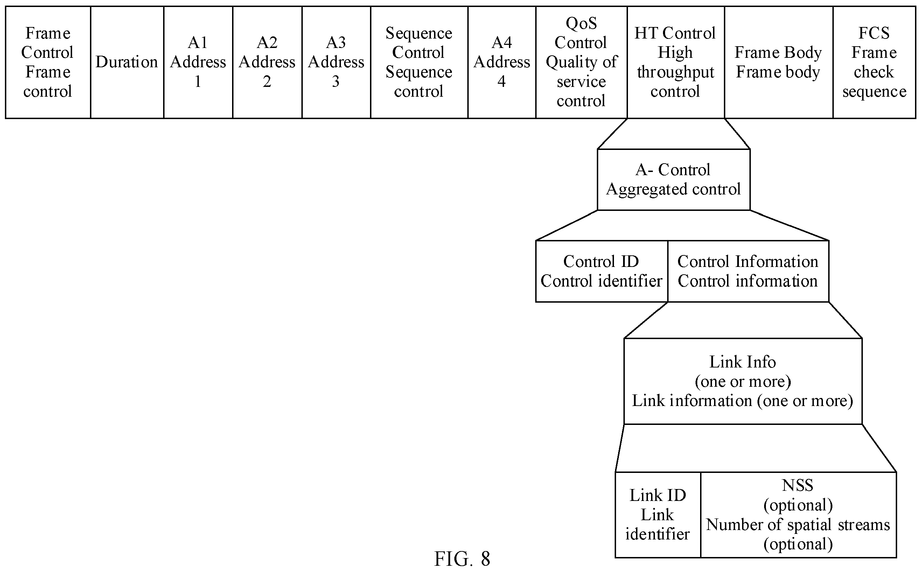

The first frame is a data frame, and the link indication information may be carried in an aggregated (Aggregated) control (A-control) field in a high throughput (High Throughput, HT) control (HT control) field in a MAC header (MAC Header) of the data frame. FIG. 8 is a schematic diagram of a frame structure of a MAC header according to an embodiment of this application. As shown in FIG. 8, the MAC header includes an HT control field. The HT control field includes the A-control field. The A-control field includes a control identifier (control ID) and a control information (control information) field. The control information field includes one or more link information fields. One link information field may indicate information about one link. The link information field indicates information about a link that the AP MLD requests the non-AP MLD to enable, to be specific, indicate the one or more second links. Each link information field may include a link identifier (link ID). Optionally, the link information field may further include a number of spatial streams that the AP MLD requests the non-AP MLD to enable on a link indicated by the link identifier. The link information field in FIG. 8 may be a link identifier bitmap, namely, a link ID bitmap.

### (3) The first frame is a new type of frame

The first frame may be a new type of frame, and the link indication information may be carried in a frame body (frame body) of the first frame.

S103: The non-AP MLD receives the first frame on the first link.

S104: The non-AP MLD enables the one or more second links based on the link indication information carried in the first frame.

Specifically, the non-AP MLD receives the first frame on the first link. After receiving the first frame, the non-AP MLD enables a corresponding link based on the link indication information in the first frame, to be specific, enables the one or more second links indicated by the link indication information. It may be understood that "enabling the second link" may be replaced with "changing a link status of the second link from a doze state/disabled state into an active state/enabled state". The first link is in the active state/enabled state.

Optionally, before step S101, the link indication method for multi-link communication may further include step S105: The non-AP MLD may send a second frame to the AP MLD on the first link, where the second frame indicates the non-AP MLD to enter a multi-link spatial multiplexing power save mode. The second frame carries information about the first link and a third link. The first link is a link enabled by the non-AP MLD in the multi-link spatial multiplexing power save mode, namely, an anchor link (anchor link). The third link is a link on which the non-AP MLD and the AP MLD establishes a multi-link association. For example, the non-AP MLD establishes the multilink association with the AP MLD on five links: a link 1 to a link 5. Assuming that the first link is the link 1, the third link is the remaining four links: the link 2 to the link 5. After the non-AP MLD enters the multi-link spatial multiplexing power save mode, the first link is in the active state/enabled state, and the third link is in the doze state/disabled state.

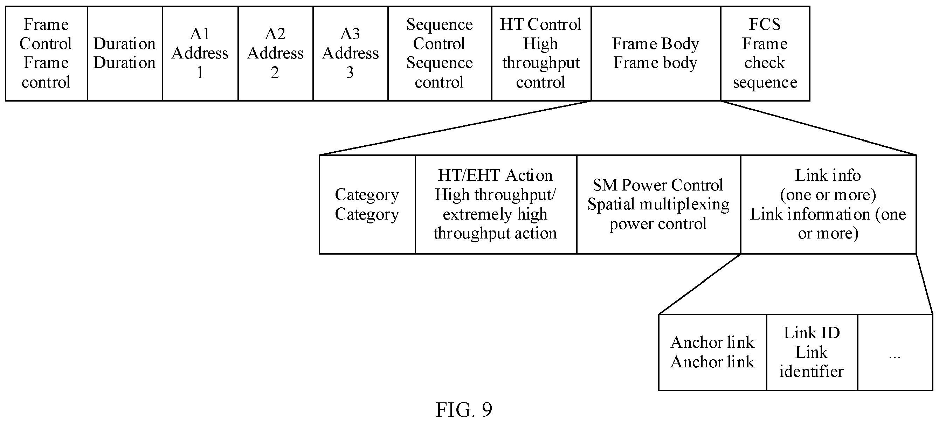

FIG. 9 is a schematic diagram of a structure of the second frame according to an embodiment of this application. As shown in FIG. 9, the second frame includes one or more of the following fields: a frame control field, a duration (duration) field, an address 1 (address 1, A1) field, an address 2 (address 2, A2) field, an address 3 (address 2, A3) field, a sequence control field, an HT control field, a frame body (frame body), and an FCS field. The frame body (frame body) field includes one or more link information fields. One link information field may indicate information about one link. The one or more link information fields carry information about the first link and the third link. Each link information field may include an anchor link (anchor link) field and a link identifier (link ID) field. Optionally, the link information field may further include a link status. The anchor link (anchor link) field indicates whether a link identified by the link identifier field in the link information field is a link in the active state (or a non-doze state), to be specific, whether the link is the first link. The anchor link (anchor link) field may be 1 bit in length. When a value of the anchor link field is 1, it indicates that a link identified by the link identifier field in the link information field is in the active state, to be specific, the link is the first link. When a value of the anchor link field is 0, it indicates that a link identified by the link identifier field in the link information field is in the doze state, to be specific, the link is the first link. It should be understood that a mapping relationship between the value and the meaning of the anchor link (anchor link) field is not limited in this embodiment of this application. Alternatively, when a value is 0, it indicates that a link identified by the link identifier field in the link information field is in the doze state, to be specific, the link is not the first link. When a value is 1, it indicates that a link identified by the link identifier field in the link information field is in the active state, the link is the first link.

Optionally, the third link includes the one or more second links determined by the AP MLD. In other words, when determining the second link, the AP MLD may select the second link from the third link.

Optionally, after step S104, the non-AP MLD has enabled the one or more second links. To further save power consumption and reduce energy waste, after enabling the one or more second links, the non-AP MLD may disable, by setting a timeout mechanism, some second links on which no data is transmitted for long time. For example, the non-AP MLD sets a timer. If the non-AP MLD does not receive, on the second link before the timer expires, a data frame sent by the AP MLD, the non-AP MLD may disable the second link. Specifically, after step S104, the link indication method for multi-link communication may further include step S106: If duration in which the non-AP MLD enables the second link exceeds first duration, and no frame sent by the AP MLD to the non-AP MLD is received on the second link within the first duration, the non-AP MLD disables the second link.

In an implementation, after enabling the second link, the non-AP MLD starts the timer. An initial value of the timer may be the first duration. When the timer decreases to 0, the non-AP MLD has not received, on the second link, a frame sent by the AP MLD to the non-AP MLD, then the non-AP MLD may disable the second link. "Disable the second link" may be understood as change a link status of the second link from the active state/enabled state into the doze state/disabled state.

For example, it is assumed that the link 2, the link 4, and the link 5 are all the second links. After enabling the link 2, the link 4, and the link 5, the non-AP MLD starts the timer. It is assumed that the initial value of the timer is 2s. When the timer decreases to 0, the non-AP MLD has not received, on the link 2, a frame sent by the AP MLD to the non-AP MLD, and has received, on the link 4 and link 5, a frame sent by the AP MLD to the non-AP MLD, then the non-AP MLD may disable the link 2. For another example, when the timer decreases to 0, the non-AP MLD has not received, on the link 2 and the link 5, a frame sent by the AP MLD to the non-AP MLD, and has received, on the link 4, a frame sent by the AP MLD to the non-AP MLD, then the non-AP MLD may disable the link 2 and the link 5. One second link may correspond to one timer, or a plurality of second links may correspond to one timer.

It may be understood that, after the timer set by the non-AP MLD expires, the non-AP MLD has not received, on the second link, the frame sent by the AP MLD to the non-AP MLD. A possible cause is as follows: The AP MLD plans to send data to the non-AP MLD on the second link, and obtains a channel through contention on the first link, in other words, is about to obtain a channel through contention on the second link. However, in a process of sending the first frame and receiving a response frame of the first frame, the second link is busy for long time. As a result, the AP MLD cannot obtain the channel on the second link through contention before a transmission opportunity (transmission opportunity, TXOP) of the first link ends.

Optionally, after the non-AP MLD enables the one or more second links, when at least one of the following three events occurs on the first link, the non-AP MLD has not received the data frame from the AP MLD on the second link, and the non-AP MLD disables the second link. Event 1: The non-AP MLD receives, on the first link, a frame sent by another AP/AP MLD or another STA/non-AP MLD. Specifically, the non-AP MLD may determine by detecting whether a transmitter address in the frame received on the first link is the same as a transmitter address in the first frame. If they are different, it indicates that the non-AP MLD receives, on the first link, the frame sent by the another AP/AP MLD or the another STA/non-AP MLD. Event 2: The non-AP MLD receives, on the first link, a frame sent by the AP MLD to another STA/non-AP MLD. Specifically, the non-AP MLD may detect whether a receiver address in a frame received on the first link is the non-AP MLD itself; and if not, it indicates that the non-AP MLD receives, on the first link, the frame sent by the AP MLD to the another STA/non-AP MLD. Event 3: The non-AP MLD does not receive any frame on the first link after a point coordination function interframe space (point coordinate function interframe space, PIFS).

Optionally, similar to the timeout mechanism of the non-AP MLD, the AP MLD may also set a timeout mechanism. Specifically, after step S104, the link indication method for multi-link communication may further include step S107: When duration of channel contention of the AP MLD on the second link exceeds first duration, the AP MLD stops performing channel contention on the second link, or skips sending data to the non-AP MLD after successful channel contention on the second link.

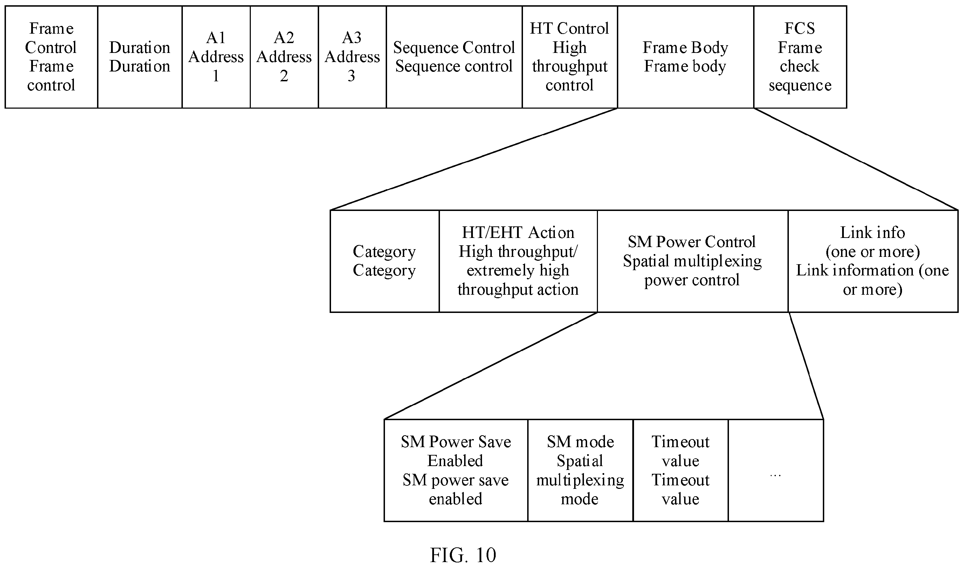

Optionally, a value of the first duration may be sent by the non-AP MLD to the AP MLD by using the second frame in step S105. The first duration may be defined by the non-AP MLD. The first duration may be carried in a spatial multiplexing (Spatial multiplexing, SM) power control (SM Power Control) field or a link information field in the frame body of the second frame. FIG. 10 is a schematic diagram a frame structure of the second frame that carries the first duration according to an embodiment of this application. As shown in FIG. 10, the first duration may be carried in an SM power control field in the frame body (frame body) of the second frame. The SM power control field includes an SM energy save enabled (SM Power save enabled) field, an SM mode (SM mode) field, and a timeout value (timeout value) field. The timeout value field indicates the first duration.

Optionally, a value of the first duration may be (or be equal to) a TXOP duration limit, namely, a TXOP limit. Alternatively, a value of the first duration may be (or be equal to) a TXOP limit corresponding to an access category AC of a data frame received by the non-AP MLD on the first link. Alternatively, a value of the first duration may be (or be equal to) a maximum length of a physical layer protocol data unit (physical layer protocol data unit, PPDU). The maximum PPDU length is specified in the 802.11 protocol.

It may be understood that TXOP duration is a period of time in which a station (the station herein may refer to an access point or a non-access point station) performs data transmission without interference after obtaining a transmission opportunity. The station that obtains the TXOP may be referred to as a TXOP holder (TXOP holder). The TXOP duration includes duration required by the TXOP holder to transmit one or more pieces of data and a corresponding immediate response frame (the immediate response frame herein may refer to an ack frame, a block ack, or the like). According to laws and regulations of countries and regions, the TXOP duration may not exceed an upper limit. The upper limit is referred to as a TXOP limit (TXOP limit). The value of the TXOP limit is subject to the laws and regulations of the countries and/or regions. An AP may broadcast the value of the TXOP limit by using a beacon (beacon) frame or a probe response (probe response) frame. It may be further understood that the TXOP limit is further related to an access category (access category, AC, or referred to as an access type) for which a transmission opportunity is obtained through contention. Different access categories correspond to different TXOP limits.

Optionally, the first duration may be a time length indicated by a duration field in a MAC header of the first frame.

It can be learned that in this embodiment of this application, the non-AP MLD enables a specific link only based on an indication of the AP MLD. This can quickly switch a communication mode of the non-AP MLD, selectively enable a link, reduce energy waste due to blind enabling of all links by the non-AP MLD, reduce power consumption, and obtain high-speed and low-latency data transmission experience.

In an optional embodiment, an AP MLD generates and sends a first frame on a first link. The first frame carries link indication information. The link indication information indicates whether a second link exists. If the link indication information indicates that the second link exists, the link indication information further indicates one or more second links. In other words, the link indication information indicates zero, one, or more second links. A non-AP MLD receives the first frame on the first link, and performs a corresponding operation based on the link indication information carried in the first frame. To be specific, if the link indication information indicates that the second link does not exist, the non-AP MLD waits to receive a data frame on the first link, or the non-AP MLD does not enable another link other than the first link, or the non-AP MLD automatically enables all links other than the first link.

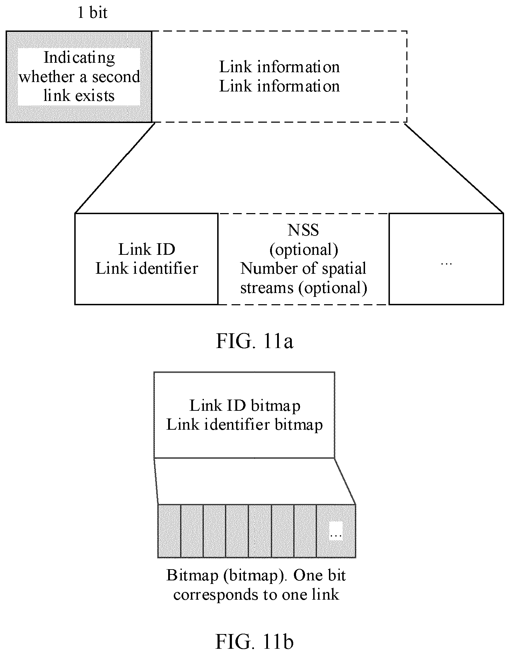

Optionally, the link indication information may be carried in the first frame. Specifically, a single 1 bit indicates whether the second link exists, and the link information field indicates the one or more second links. One second link may correspond to one link information field. FIG. 11a is a schematic diagram of a structure of a first frame indicating whether a second link exists according to an embodiment of this application. As shown in FIG. 11a, one bit in the first frame indicate whether the second link exists. For example, when a value of the bit is 1, it indicates that the second link exists, and further indicates that the first frame has/includes one or more link information fields. Each link information field includes a link identifier and/or a number of spatial streams of the second link. When a value of the bit is 0, it indicates that the second link does not exist, or indicates that the first frame does not have/include a link information field. A mapping relationship between the value and the meaning of the bit indicating whether the second link exists in the first frame is not limited in this embodiment of this application. Alternatively, when the value is 1, it indicates that the second link does not exist, or it indicates that the first frame does not have/include a link information field. When the value is 0, it indicates that the second link exists, and further indicates that the first frame includes one or more link information fields.

Optionally, the link indication information may be carried in the link information field in the first frame. In other words, the link information field indicates whether the second link exists, and if the second link exists, further indicates one or more second links. One second link may correspond to one link information field. One link indication information includes a link identifier of one second link and/or a number of spatial streams of the second link. When a value of the link ID is a preset value, it indicates that the link information field is invalid. When all link information fields are invalid, it indicates that the second link does not exist.

Optionally, the link indication information may be carried in a link identifier bitmap of the first frame. Each bit in the link identifier bitmap corresponds to one link. If at least one bit in the link identifier bitmap is set to 1, it indicates that the second link exists, and a link corresponding to the bit is the second link, or in other words, a link corresponding to the bit is enabled. If all bits in the link identifier bitmap are set to 0, it indicates that the second link does not exist. It may be understood that at least one bit in the link identifier bitmap may be set to 0, to indicate that the second link exists, and a link corresponding to the bit is enabled. Alternatively, all bits in the link identifier bitmap are set to 1, to indicate that the second link does not exist. FIG. 11b is a schematic diagram of a frame structure of a link identifier bitmap according to an embodiment of this application. As shown in FIG. 11b, a length of the link identifier bitmap may not be limited, or may be 1 byte (namely, 8 bits).

It can be learned that in this embodiment of this application, when determining zero second link, an AP MLD may still carry the link indication information in the first frame, to indicate that a second link does not exist. After receiving the link indication information indicating that the second link does not exist, a non-AP MLD may wait to receive a data frame from the AP MLD only on a first link, and does not automatically enable another link other than the first link. This can reduce energy waste due to blind enabling of the another link by the non-AP MLD, and save power consumption of the non-AP MLD.

In another optional embodiment, the link indication method for multi-link communication provided in this application may not only be applied to a "multi-link spatial multiplexing power save mode" scenario, but also be applied to another scenario. When being applied to another scenario, the link indication method for multi-link communication includes: An AP MLD may perform channel contention on a first link. After a backoff counter on the first link backs off to 0, the AP MLD sends a first frame on the first link. The first frame carries link indication information. The link indication information indicates one or more second links. In other words, the link indication information may indicate a non-AP MLD to enable a specific link after receiving the first frame. Correspondingly, after receiving the first frame on the first link, the non-AP MLD enables the one or more second links indicated by the link indication information based on an indication of the link indication information. After the non-AP MLD enables the one or more second links, the AP MLD may perform channel contention on the one or more second links, and send a data frame to the non-AP MLD on a successfully contended second link.

Optionally, to ensure that the non-AP MLD enables a corresponding second link based on the indication of the link indication information in the first frame after receiving the first frame, the non-AP MLD may declare in advance an operating mode of the non-AP MLD, or declare whether the non-AP MLD supports the AP MLD in requesting the non-AP MLD to enable another link. When the operating mode allows the AP MLD to request the non-AP MLD to enable the another link, the non-AP MLD may enable the corresponding second link based on the indication of the link indication information in the first frame only after receiving the first frame. Specifically, before receiving the first frame, the non-AP MLD may send a third frame to the AP MLD. The third frame is used to declare the operating mode of the non-AP MLD, or declare whether the non-AP MLD supports the AP MLD in requesting the non-AP MLD to enable the another link. When the third frame declares/indicates that the operating mode of the non-AP MLD is "a mode in which an AP MLD is allowed to request a non-AP MLD to enable another link", or the third frame declares/indicates that the non-AP MLD supports the AP MLD in requesting the non-AP MLD to enable the another link, the AP MLD sends the first frame on the first link.

The non-AP MLD may carry the operating mode declaration/indication of the non-AP MLD in an operating mode (operating mode, OM) control (control) field of an A-control field of an HT control field. Alternatively, the non-AP MLD may carry the operating mode declaration/indication of the non-AP MLD in an extremely high throughput (extremely high throughput, EHT) capabilities element (EHT capabilities element).

It can be learned that the link indication method in this embodiment of this application may be applied to the another scenario other than the multi-link spatial multiplexing power save mode scenario. This enriches an application scenario of the link indication method provided in this application, reduces energy waste and power consumption of the non-AP MLD in the power save mode scenario of the non-AP MLD, reduces power consumption of the non-AP MLD in the another scenario, and obtains high-speed and low-latency data transmission experience.

In still another optional embodiment, a multiple spatial stream communication method provided in this embodiment of this application may be applied to an enhanced multi-link single radio (enhanced multi-link single radio, eMLSR) scenario. It may be understood that the MU-RTS frame proposed in this application may also be applied to the eMLSR scenario. Specifically, when a non-AP MLD is in the eMLSR mode, the non-AP MLD may monitor on a plurality of links (for example, two links), but receive only on one link. After receiving the MU-RTS frame on a specific link (for example, a first link), the non-AP MLD may move a radio frequency channel resource (RF chain) on another link to the link (for example, the first link). In this way, the non-AP MLD has a capability of receiving more spatial streams, and an AP MLD can use more spatial streams to send data to the non-AP MLD on the link (for example, the first link).

The AP MLD may indicate, in the MU-RTS frame, a number of radio frequency channels to be moved by the non-AP MLD to the first link, or indicate a number of spatial streams to be received by the non-AP MLD.

For a structure of the MU-RTS frame, refer to the structure shown in FIG. 6, FIG. 7a, FIG. 7b, or FIG. 7c.

It can be learned that in this embodiment of this application, the MU-RTS frame indicates, to the non-AP MLD, the number of spatial streams to be received by the non-AP MLD. In this way, the non-AP MLD has a capability of receiving more spatial streams, and the AP MLD can use more spatial streams to send data to the non-AP MLD on one link.

### Embodiment 2

Embodiment 2 of this application describes how a non-AP MLD notifies an AP MLD of a specific link that is to be enabled/has been enabled by the non-AP MLD, so that the AP MLD sends a data frame to the non-AP MLD on the enabled link, increasing a peak transmission rate.

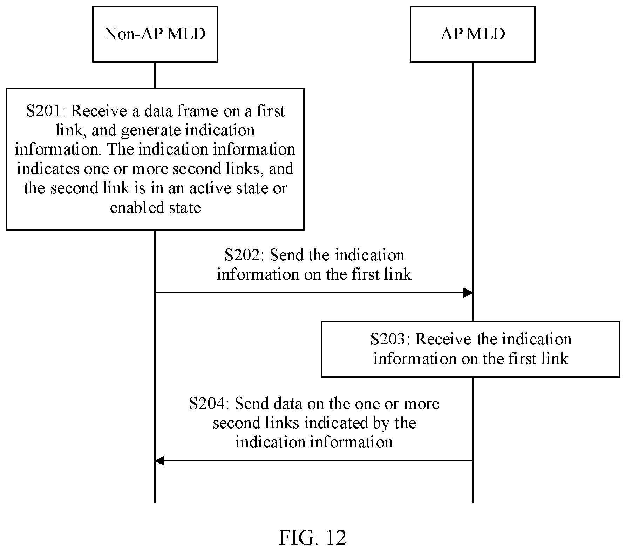

FIG. 12 is another schematic flowchart of a link indication method for multi-link communication according to an embodiment of this application. In the link indication method for multi-link communication, a non-AP MLD and an AP MLD have established a multi-link association. As shown in FIG. 12, the link indication method for multi-link communication includes but is not limited to the following steps.

S201: The non-AP MLD receives a data frame on a first link, and generates indication information. The indication information indicates one or more second links, and the second link is in an active state or enabled state.

S202: The non-AP MLD sends the indication information on the first link.

Specifically, the non-AP MLD may work on only one link, for example, the first link. When receiving the data frame from the AP MLD on the first link, the non-AP MLD may send the indication information to the AP MLD on the first link. The indication information indicates one or more second links. In other words, the indication information may notify the AP MLD of a specific link that is to be enabled (expected to be enabled/planned to be enabled) or has been enabled by the non-AP MLD. After the non-AP MLD enables the second link, a link status of the second link changes from a doze state/disabled state into the active state/enabled state". The first link and the second link are different links in a plurality of links on which the AP MLD and the non-AP MLD establish the multi-link association.

Optionally, after receiving the data frame from the AP MLD on the first link, the non-AP MLD may automatically enable one or more second links.

Optionally, before the non-AP MLD receives the data frame from the AP MLD on the first link, the AP MLD may perform channel contention on the first link, and send the data frame to the non-AP MLD on the first link after successful channel contention. It may be understood that "successful channel contention" may mean a case in which a backoff counter backs off to 0, frame exchange is complete, and a data frame can be directly sent.

Optionally, the indication information may be carried in an acknowledgment (acknowledge, ACK) frame of the data frame. The acknowledgment frame may be a multi-station block acknowledgment (multi-STA block acknowledge, M-BA) frame. Specifically, the indication information is specifically carried in a per AID traffic identifier (traffic identifier) information field (per AID TID information field) in the M-BA frame. The per AID TID information field includes a control segment (control segment) field. It should be understood that the control segment field may also be referred to as a control information (control information) field. The control segment field may include one or more A-control fields. The A-control field carries the indication information. The indication information may include one or more of the following: a link identifier of the second link, a link status of the second link, and a number of spatial streams of the second link.

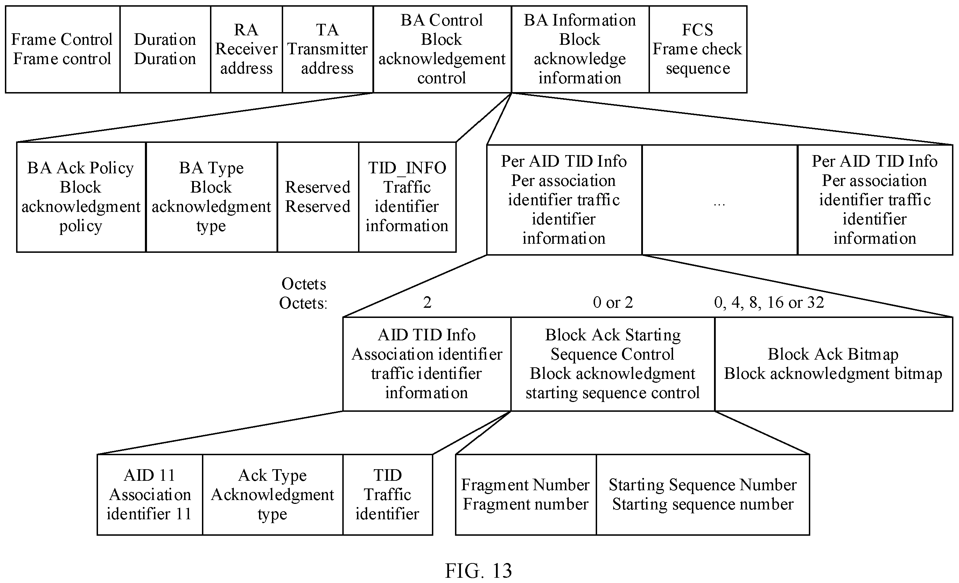

FIG. 13 is a schematic diagram of a frame structure of the M-BA frame according to an embodiment of this application. As shown in FIG. 13, the M-BA frame includes a block acknowledgment information (BA information) field. The BA information field includes one or more per AID TID information fields. One per AID TID information field includes an AID TID information field, a block acknowledgment starting sequence control (block Ack starting sequence control) field, and a block acknowledgment bitmap (black Ack Bitmap). The AID TID information field includes an AID 11 field, an acknowledgment type (Ack type) field, and a traffic identifier field.

In this embodiment of this application, the indication information is carried in a special per AID TID information field. In the special per AID TID information field, a value of the AID 11 field is set to a special value/a preset value, for example, a value in a range [2008, 2047], to indicate that the per AID TID information field carries the indication information. In addition, a fragment number (fragment number) field in the block acknowledgment starting sequence control field indicates that a length of a control segment field is 4 bytes, 8 bytes, 16 bytes, or 32 bytes.

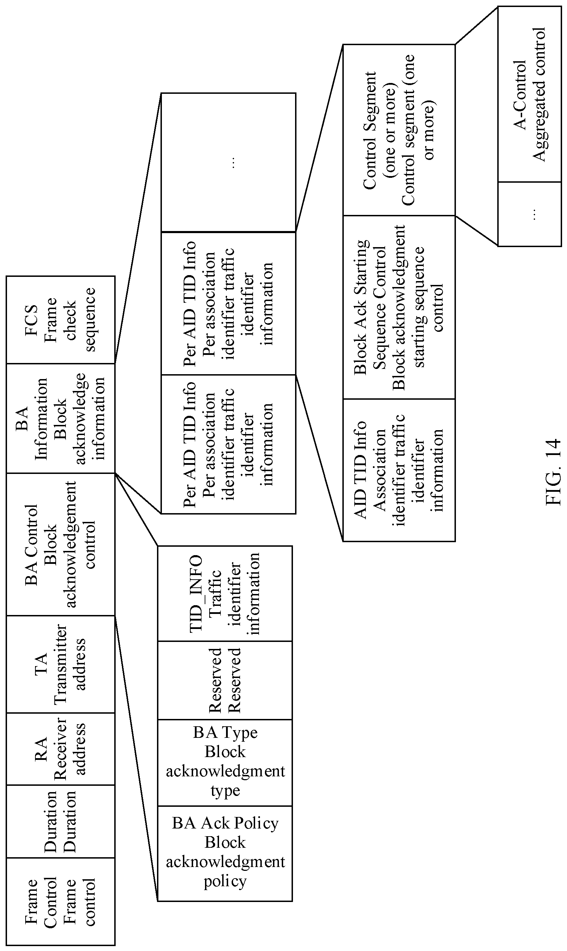

FIG. 14 is a schematic diagram of a frame structure of the control segment field in the M-BA frame according to an embodiment of this application. As shown in FIG. 14, a BA information field includes one special per AID TID information field. The special per AID TID information field includes an AID TID information field, a block acknowledgment starting sequence control (block Ack starting sequence control) field, and one or more control segment fields. The control segment field may include one or more A-control fields. Each A-control field may be located in last 30 bits of one 4 bytes.

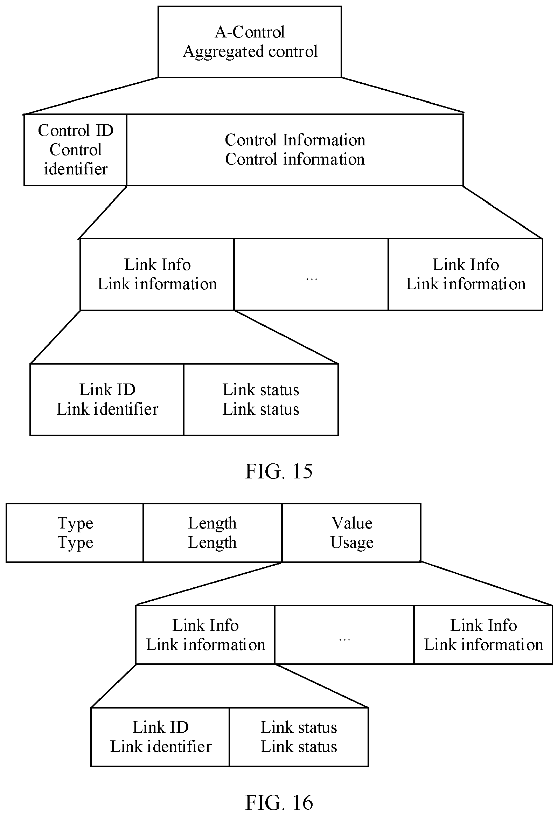

In an implementation, the indication information is carried in the A-control field of the control segment field. FIG. 15 is a schematic diagram of a frame structure of the A-control field in the control segment field according to an embodiment of this application. To carry the indication information in the M-BA frame, in this embodiment of this application, a new control information type (namely, a new control ID value) is defined in the A-control field. As shown in FIG. 15, the A-control field includes a control identifier (control ID) field and a control information field. The control identifier field may be set to a new value, to indicate that the control information field following the control identifier field carries the indication information. The control information field in the A-control field may include one or more link information fields. Each link information field may include a link identifier (link ID) field of one link, and optionally further include a link status (link status) field. One link information field may indicate information about one link. The link status herein may include a closed state (disabled state), an awake state (an active/enabled state), a doze state, and the like. Values and meanings of the link status field are shown in the following Table 1. It may be understood that a length of the link status field is not limited in this embodiment of this application. For example, the length may be 2 bits, 3 bits, or 1 byte.

**Table 1**

| Value of a link status field | Meaning |
|---|---|
| First value | Closed state |
| Second value | Awake state |
| Third value | Doze state |
| Another value | Reserved |

In an example, the first value is 00, the second value is 01, the third value is 10, and 11 indicates reserved. In another example, the first value is 00, the second value is 11, the third value is 01, and 10 indicates reserved. It may be understood that a mapping relationship between the value and the meaning of the link status field is only an example. There may be another mapping relationship between the value and the meaning of the link status field. The first value, the second value, and the third value herein are only examples, and do not constitute a limitation on the first value, the second value, and the third value. The first value, the second value, and the third value may alternatively be other values. Specific values of the first value, the second value, and the third value are not limited in this embodiment of this application.

Optionally, the link information field may further include a number of sent spatial streams or a number of received spatial streams on a link identified by the link identifier.

In another implementation, the indication information may not be carried in the A-control field, but is carried in a control segment field of one special per AID TID information field in another form. FIG. 16 is a schematic diagram of a frame structure of the control segment field that carries indication information according to an embodiment of this application. As shown in FIG. 16, the control segment field may include a type (type) field, a length (length) field, and a usage (value) field. The value field includes one or more link information fields. Each link information field may include a link identifier (link ID) field of one link, and optionally further include a link status (link status) field. Optionally, the link information field may further include a number of sent spatial streams or a number of received spatial streams on a link identified by the link identifier. One link information field may indicate information about one link.

S203: The AP MLD receives the indication information on the first link.

S204: The AP MLD sends data to the non-AP MLD on the one or more second links indicated by the indication information.

Specifically, after receiving the indication information on the first link, the AP MLD may perform channel contention, based on an indication of the indication information, on the one or more second links indicated by the indication information. The AP MLD may simultaneously/concurrently send the data to the non-AP MLD on the first link and one or more successfully contended second links, so that a peak transmission rate can be increased.

Optionally, the timeout mechanism in Embodiment 1 may be applied to this embodiment of this application. For the non-AP MLD, after enabling the one or more second links or sending the indication information, the non-AP MLD may set a timer. An initial value of the timer is first duration. If the non-AP MLD does not receive, on the second link before the timer expires, a data frame sent by the AP MLD, the non-AP MLD may disable the second link. It can be learned that in this embodiment of this application, the timeout mechanism can be used to disable some second links on which no data is transmitted for long time. This can further reduce energy waste of the non-AP MLD and save power consumption.

When starting to perform channel contention on the one or more second links, the AP MLD may set a timer. An initial value of the timer is first duration. If a backoff counter on a specific second link does not back off to 0 before the timer expires, the AP MLD may give up channel contention on the second link, or do not send data to the non-AP MLD after successful channel contention on the second link.

Optionally, the first duration in this embodiment of this application may be a time length indicated by a duration field in the data frame sent by the AP MLD on the first link.

It can be learned that in this embodiment of this application, the non-AP MLD indicates, by using an acknowledgment frame to the AP MLD, that the non-AP MLD enabled another link. This helps the AP MLD send the data frame to the non-AP MLD on the another link, increasing a peak transmission rate and reducing a data transmission delay.

In an optional embodiment, when a STA wants to send control information of the STA to an AP, the STA needs to perform channel contention, and can send, to the AP only after obtaining a transmission opportunity, a frame that carries the control information. Therefore, a process in which the STA sends the control information is complex. When the control information of the STA changes, the AP cannot obtain new control information of the STA in time. Therefore, an embodiment of this application provides a control information indication method, to simplify the process in which the STA sends the control information, so that the AP can quickly obtain the control information of the STA.

Specifically, after the STA receives a data frame from the AP, the STA may generate and send the control information. The control information may be carried in an acknowledgment frame of the data frame. The acknowledgment frame may be an M-BA frame. Optionally, after receiving the control information, the AP parses the control information to obtain a status of the STA. In other words, the control information may help the AP obtain the status of the STA.

The STA in this embodiment of this application may be a single-link device, or may be one STA in the non-AP MLD. It may be understood that the AP in this embodiment of this application may be a single-link device, or may be one AP in the AP MLD. This is not limited in this embodiment of this application.

Optionally, the control information may be carried in a per AID TID information field in the M-BA frame. The per AID TID information field includes a control segment (control segment) field. The control segment field may carry the control information (namely, the foregoing control information) of the STA. In this embodiment of this application, the control information is carried in a special per AID TID information field. In the special per AID TID information field, a value of the AID 11 field is set to a special value/a preset value, for example, a value in a range [2008, 2047], to indicate that the per AID TID information field carries the control information. In addition, a fragment number (fragment number) field in the block acknowledgment starting sequence control field indicates that a length of a control segment field is 4 bytes, 8 bytes, 16 bytes, or 32 bytes.

Optionally, the control segment field may include one or more A-control fields. Each A-control field can carry one type of control information of the STA.

The control information may include information that may be carried in an A-control field defined in the 802.11 protocol standard, for example, OM information, status report (buffer status report, BSR) information, and bandwidth query report (bandwidth query report, BQR) information.

It can be learned that the STA in this embodiment of this application carries the control information in the M-BA frame, and can send the control information to the AP without initiating a channel contention process. This simplifies a control information indication process, and enables the AP to quickly obtain the control information of the STA. In addition, in this embodiment of this application, the per AID TID information field in the M-BA frame is reused, and the AID 11 field of the per AID TID information field further indicates that the per AID TID information field carries the control information, so that the M-BA frame can be used for acknowledgment and control information indication. This enriches functions of the M-BA frame and reduce signaling overheads.

In another optional embodiment, an embodiment of this application provides a control information transmission method, and in particular, relates to new control information. The new control information is carried in an M-BA frame, to indicate a status of another link. Specifically, the control information may be referred to as media state information (medium state information). For ease of description, the media state information is referred to as MSI for short below. The MSI may be sent by one MLD to another MLD, and is usually sent by an AP MLD to a non-AP MLD.

When a non-simultaneous transmit and receive (non-simultaneous transmit and receive, non-STR) multi-link device sends on one link, another link is interfered by sending energy on the link. As a result, the another link is in a "blind" state, and a backoff counter on the another link cannot back off to 0 in channel contention for long time, to be specific, the another link is busy for long time.

Therefore, after successfully obtaining a channel through contention on one link (for example, a first link), a non-STR non-AP MLD can send a data frame on the first link. After receiving data frame from the non-STR non-AP MLD on the first link, the AP MLD may reply an M-BA frame. The M-BA frame carries MSI of another link. "Another link" herein may mean a remaining link other than the first link in a plurality of links associated with the AP MLD and the non-AP MLD. After receiving the M-BA frame from the AP MLD, the non-AP MLD sets a NAV on another link based on the MSI carried in the M-BA frame. Optionally, after a value of the NAV changes to 0, the non-AP MLD may start channel contention on the another link.

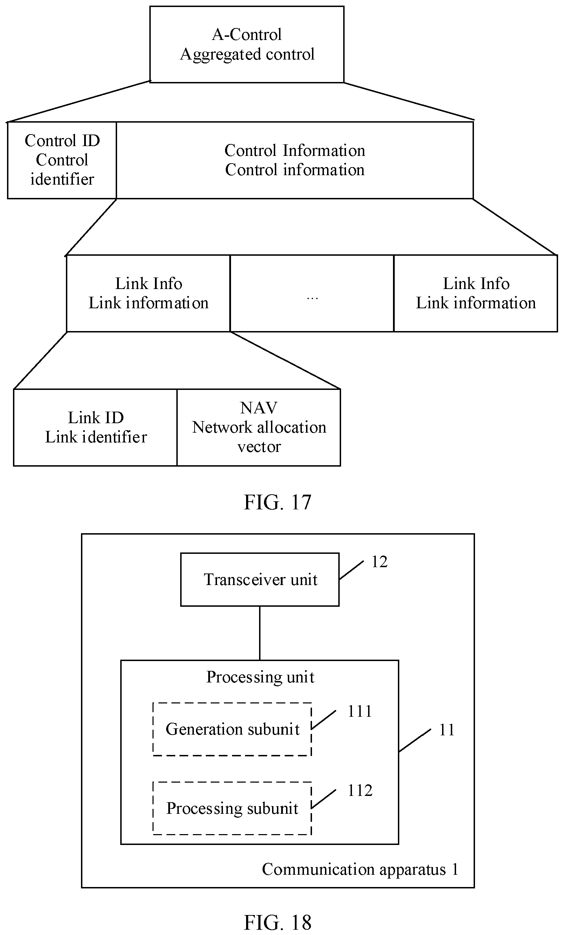

Optionally, the MSI may include a link identifier and link status information. The link status information may include a NAV of a link identified by the link identifier. FIG. 17 is a schematic diagram of a frame structure of an A-control field carrying the MSI in the M-BA frame according to an embodiment of this application. As shown in FIG. 17, the A-control field includes a control identifier (control ID) field and a control information field. The control identifier field may be set to a new value, to indicate that the control information field following the control identifier field carries the MSI. The MSI may include one or more link information fields. Each link information field may include a link identifier (link ID) field of one link, and a NAV field. One link information field may indicate MSI about one link. It may be understood that for a frame structure of the M-BA frame in this embodiment of this application, refer to the structures shown in FIG. 13 and FIG. 14.

It can be seen that, in this embodiment of this application, the status of the another link is carried in the M-BA frame, so that a non-STR non-AP MLD does not blindly perform channel contention on the another link, reducing power consumption of the non-AP MLD.

The foregoing content describes in detail the methods provided in this application. To better implement the foregoing solutions in embodiments of this application, embodiments of this application further provide corresponding apparatuses or devices.

In embodiments of this application, the AP MLD and the non-AP MLD may be divided into functional modules based on the foregoing method examples. For example, each functional module may be obtained through division based on each function, or two or more functions may be integrated into one processing module. The integrated module may be implemented in a form of hardware, or may be implemented in a form of a software function module. It should be noted that, in embodiments of this application, module division is an example, and is only a logical function division. In an actual implementation, another division manner may be used. The following describes in detail communication apparatuses in embodiments of this application with reference to FIG. 18 to FIG. 20. The communication apparatus is an access point or a station. Further, the communication apparatus may be an apparatus in the AP MLD, or the communication apparatus is an apparatus in the non-AP MLD.

When an integrated unit is used, refer to FIG. 18. FIG. 18 is a schematic diagram of a structure of a communication apparatus 1 according to an embodiment of this application. The communication apparatus 1 may be an AP MLD or a chip in an AP MLD, for example, a Wi-Fi chip. As shown in FIG. 18, the communication apparatus 1 may include a processing unit 11 and a transceiver unit 12.

In a design, the processing unit 11 is configured to generate a first frame. The first frame carries link indication information. The link indication information indicates one or more second links. The first frame indicates a non-AP MLD to enable the one or more second links. The transceiver unit 12 is configured to send the first frame on a first link.

Optionally, the first link is in an active state/enabled state, and the second link is in a doze state/disabled state.

Optionally, the first frame may be a MU-RTS frame, or a data frame, or a new frame.

Optionally, the processing unit 11 may include a generation subunit 111 and a processing subunit 112. The generation subunit 111 is configured to generate the first frame. The processing subunit 112 is configured to: when duration of channel contention on the second link exceeds first duration, stop performing channel contention on the second link, or skip sending data to the non-AP MLD after successful channel contention on the second link. It may be understood that, in an actual application, the processing unit 11 may include different subunits, to implement functions of the generation subunit 111 and the processing subunit 112. It may be further understood that functions of the generation subunit 111 and the processing subunit 112 may alternatively be implemented by one unit. This is not limited in this embodiment of this application.

It can be learned that the communication apparatus 1 indicates, by using the link indication information carried in the first frame, the non-AP MLD to enable a specific link only based on an indication of the AP MLD. This can quickly switch a communication mode of the non-AP MLD, selectively enable a link, reduce energy waste due to blind enabling of all links by the non-AP MLD, reduce power consumption, and obtain high-speed and low-latency data transmission experience.

It should be understood that the communication apparatus 1 in the design may correspondingly perform Embodiment 1, and the foregoing operations or functions of the units in the communication apparatus 1 are respectively used to implement corresponding operations of the AP MLD in Embodiment 1. For brevity, details are not described herein again.

In another design, the transceiver unit 12 is configured to: receive indication information on the first link, where the link indication information indicates one or more second links, and send a data frame to the non-AP MLD on one or more second links indicated by the indication information.

Optionally, the communication apparatus 1 may further include a processing unit 11. The processing unit 11 is configured to: generate the data frame, and perform channel contention on the one or more second links indicated by the indication information. The transceiver unit 12 is specifically configured to: after successful channel contention on the one or more second links, send the data frame to the non-AP MLD on the one or more second links.

Optionally, the first link is in an active state/enabled state. Before the communication apparatus 2 enables the second link, the second link is in a doze state/disabled state. After the communication apparatus 2 enables the second link, the second link changes into the active state/enabled state.

Optionally, the indication information may be carried in an acknowledgment frame. The acknowledgment frame may be an M-BA frame.

Optionally, the indication information may include one or more of the following: a link identifier of the second link, a link status of the second link, and a number of spatial streams of the second link.

It should be understood that the communication apparatus 1 in the design may correspondingly perform Embodiment 2, and the foregoing operations or functions of the units in the communication apparatus 1 are respectively used to implement corresponding operations of the AP MLD in Embodiment 2. For brevity, details are not described herein again.

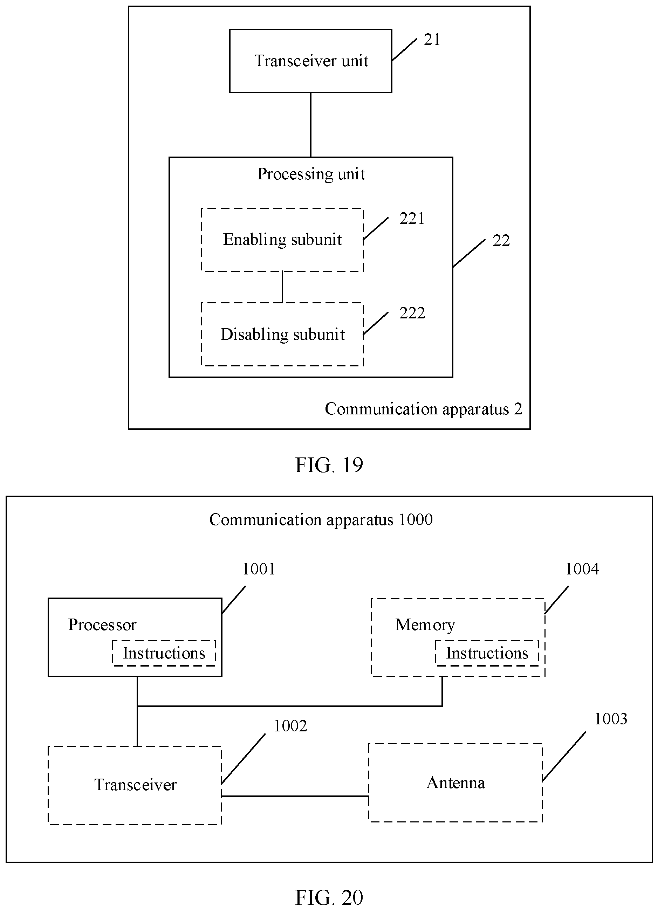

FIG. 19 is a schematic diagram of a structure of a communication apparatus 2 according to an embodiment of this application. The communication apparatus 2 may be a non-AP MLD or a chip in a non-AP MLD, for example, a Wi-Fi chip. As shown in FIG. 19, the communication apparatus 2 includes a transceiver unit 21 and a processing unit 22.

In a design, the transceiver unit 21 is configured to receive a first frame on a first link. The first frame carries link indication information. The link indication information indicates one or more second links. The first frame indicates the non-AP MLD to enable the one or more second links. The processing unit 22 is configured to enable the one or more second links based on the link indication information carried in the first frame.

Optionally, the first link is in an active state/enabled state. Before the communication apparatus 2 enables the second link, the second link is in a doze state/disabled state. After the communication apparatus 2 enables the second link, the second link changes into the active state/enabled state.

Optionally, the first frame may be a MU-RTS frame, or a data frame, or a new frame.

Optionally, the processing unit 22 may include an enabling subunit 221 and a disabling subunit 222. The enabling subunit 221 is configured to enable the one or more second links based on the link indication information carried in the first frame. The disabling subunit 222 is configured to: when duration in which the communication apparatus 2 enables the second link exceeds first duration, and no frame sent by the AP MLD to the communication apparatus 2 is received on the second link within the first duration, disable the second link.

It should be understood that the communication apparatus 2 in the design may correspondingly perform Embodiment 2, and the foregoing operations or functions of the units in the communication apparatus 1 are respectively used to implement corresponding operations of the non-AP MLD in Embodiment 1. For brevity, details are not described herein again.

In another design, the transceiver unit 21 is configured to receive a data frame on the first link. The processing unit 22 is configured to: after receiving a data frame on a first link, generate indication information, where the indication information indicates one or more second links. The transceiver unit 21 is further configured to send the indication information on the first link.

Optionally, the first link is in an active state/enabled state. Before the communication apparatus 2 enables the second link, the second link is in a doze state/disabled state. After the communication apparatus 2 enables the second link, the second link changes into the active state/enabled state.

Optionally, the indication information may be carried in an acknowledgment frame. The acknowledgment frame may be an M-BA frame.

Optionally, the indication information may include one or more of the following: a link identifier of the second link, a link status of the second link, and a number of spatial streams of the second link.

It can be learned that the communication apparatus 2 carries the indication information in the acknowledgment frame to indicate an AP MLD that the communication apparatus 2 enabled another link. This helps the AP MLD send the data frame to the communication apparatus 1 on the another link, increasing a peak transmission rate and reducing a data transmission delay.

It should be understood that the communication apparatus 2 in the design may correspondingly perform Embodiment 2, and the foregoing operations or functions of the units in the communication apparatus 2 are respectively used to implement corresponding operations of the non-AP MLD in Embodiment 2. For brevity, details are not described herein again.

The foregoing describes the AP MLD and the non-AP MLD in embodiments of this application. The following describes possible product forms of the AP MLD and the non-AP MLD. It should be understood that any product in any form that has the function of the AP MLD described in FIG. 18 and any product in any form that has the function of the non-AP MLD described in FIG. 19 fall within the protection scope of embodiments of this application. It should be further understood that the following description is only an example, and product forms of the AP MLD and the non-AP MLD in embodiments of this application are not limited thereto.

As a possible product form, the AP MLD and the non-AP MLD described in embodiments of this application may be implemented by using a general bus architecture.

FIG. 20 is a schematic diagram of a structure of a communication apparatus 1000 according to an embodiment of this application. The communication apparatus 1000 may be an AP MLD, a non-AP MLD, or an apparatus in the AP MLD or the STA. As shown in FIG. 20, the communication apparatus 1000 includes a processor 1001 and a transceiver 1002 that is internally connected to and communicates with the processor. The processor 1001 is a general-purpose processor, a dedicated processor, or the like. For example, the processor 1001 may be a baseband processor or a central processing unit. The baseband processor may be configured to process a communication protocol and communication data, and the central processing unit may be configured to control a communication apparatus (for example, a base station, a baseband chip, a terminal, a terminal chip, a DU, or a CU) to execute a computer program, to process data of the computer program. The transceiver 1002 may be referred to as a transceiver unit, a transceiver, a transceiver circuit, or the like, and is configured to implement a transceiver function. The transceiver 1002 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a sending function. Optionally, the communication apparatus 1000 may further include an antenna 1003 and/or a radio frequency unit (not shown in the figure). The antenna 1003 and/or the radio frequency unit may be located inside the communication apparatus 1000, or may be separated from the communication apparatus 1000. In other words, the antenna 1003 and/or the radio frequency unit may be deployed remotely or in a distributed manner.

Optionally, the communication apparatus 1000 may include one or more memories 1004. The memory 1004 may store instructions. The instructions may be a computer program. The computer program may be run on the communication apparatus 1000, so that the communication apparatus 1000 performs the method described in the foregoing method embodiments. Optionally, the memory 1004 may further store data. The communication apparatus 1000 and the memory 1004 may be separately disposed, or may be integrated.

The processor 1001, the transceiver 1002, and the memory 1004 may be connected through a communication bus.

In a design, the communication apparatus 1000 may be configured to perform a function of the AP MLD in the foregoing Embodiment 1. The processor 1001 may be configured to perform steps S101 and S107 in FIG. 4 and/or another process of the technology described in this specification. The transceiver 1002 may be configured to perform step S 102 in FIG. 4 and/or another process of the technology described in this specification.

In another design, the communication apparatus 1000 may be configured to perform a function of the non-AP MLD in the foregoing Embodiment 1. The processor 1001 may be configured to perform steps S104 and S106 in FIG. 4 and/or another process of the technology described in this specification. The transceiver 1002 may be configured to perform steps S103 and S105 in FIG. 4 and/or another process of the technology described in this specification.

In a design, the communication apparatus 1000 may be configured to perform a function of the AP MLD in Embodiment 2. The processor 1001 may be configured to generate the data frame to be sent in step S204 in FIG. 12, and/or configured to perform another process of the technology described in this specification. The transceiver 1002 may be configured to perform steps S203 and S204 in FIG. 12, and/or configured to perform another process of the technology described in this specification.

In another design, the communication apparatus 1000 may be configured to perform a function of the non-AP MLD in the foregoing Embodiment 2. The processor 1001 may be configured to perform step S201 in FIG. 12 and/or another process of the technology described in this specification. The transceiver 1002 may be configured to perform step S202 in FIG. 12 and/or another process of the technology described in this specification.

In any one of the foregoing designs, the processor 1001 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In any one of the foregoing designs, the processor 1001 may store instructions. The instruction may be a computer program. The computer program is run on the processor 1001, so that the communication apparatus 1000 can perform the method described in the foregoing method embodiments. The computer program may be permanently configured in the processor 1000, and in this case, the processor 1001 may be implemented by hardware.

In an implementation, the communication apparatus 1000 may include a circuit, and the circuit may implement a sending, receiving, or communication function in the foregoing method embodiments. The processor and the transceiver that are described in this application may be implemented on an integrated circuit (integrated circuit, IC), an analog IC, a radio frequency integrated circuit RFIC, a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-type metal oxide semiconductor (nMetal-oxide-semiconductor, NMOS), a P-type metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

A scope of the communication apparatus described in this application is not limited thereto, and a structure of the communication apparatus may not be limited by FIG. 20. The communication apparatus may be an independent device or may be a part of a larger device. For example, the communication apparatus may be:
(1) an independent integrated circuit IC, a chip, or a chip system or subsystem;
(2) a set including one or more ICs, where optionally, the set of ICs may further include a storage component configured to store data and a computer program;
(3) an ASIC such as a modem (Modem);
(4) a module that can be embedded in another device;
(5) a receiver, a terminal, an intelligent terminal, a cellular phone, a wireless device, a handheld device, a mobile unit, a vehicle-mounted device, a network device, a cloud device, an artificial intelligence device, or the like; or
(6) another device, or the like.

In a possible product form, the AP MLD and the non-AP MLD in embodiments of this application may be implemented by a general-purpose processor.

The general-purpose processor for implementing the AP MLD includes a processing circuit and an input/output interface internally connected to and communicating with the processing circuit.

In a design, the general-purpose processor may be configured to perform a function of the AP MLD in Embodiment 1. Specifically, the processing circuit is configured to perform steps S101 and S107 in FIG. 4 and/or another process of the technology described in this specification. The input/output interface is configured to perform step S 102 in FIG. 4 and/or another process of the technology described in this specification.

In another design, the general-purpose processor may be configured to perform a function of the AP MLD in Embodiment 2. Specifically, the processing circuit is configured to generate the data frame to be sent in step S204 in FIG. 12, and/or configured to perform another process of the technology described in this specification. The input/output interface is configured to perform steps S203 and S204 in FIG. 12, and/or configured to perform another process of the technology described in this specification.

The general-purpose processor for implementing the non-AP MLD includes a processing circuit and an input/output interface internally connected to and communicating with the processing circuit.

In a design, the general-purpose processor may be configured to perform a function of the non-AP MLD in Embodiment 1. Specifically, the processing circuit is configured to perform steps S104 and S106 in FIG. 4 and/or another process of the technology described in this specification. The input/output interface is configured to perform steps S103 and S 105 in FIG. 4 and/or another process of the technology described in this specification.

In another design, the general-purpose processor may be configured to perform a function of the non-AP MLD in Embodiment 2. Specifically, the processing circuit is configured to perform step S201 in FIG. 12 and/or another process of the technology described in this specification. The input/output interface is configured to perform step S202 in FIG. 12 and/or another process of the technology described in this specification.

It should be understood that the communication apparatuses in the foregoing various product forms have any function of the AP MLD or the non-AP MLD in the method embodiments. Details are not described herein again.

An embodiment of this application further provides a computer-readable storage medium. The computer-readable storage medium stores computer program code. When the processor executes the computer program code, an electronic device performs the method in any one of the foregoing embodiments.

An embodiment of this application further provides a computer program product. When the computer program product runs on a computer, the computer is enabled to perform the method in any one of the foregoing embodiments.

An embodiment of this application further provides a communication apparatus. The apparatus may exist in a product form of a chip. A structure of the apparatus includes a processor and an interface circuit. The processor is configured to communicate with another apparatus through the interface circuit, to enable the apparatus to perform the method in any one of the foregoing embodiments.

An embodiment of this application further provides a wireless communication system, including an AP MLD and a non-AP MLD. The AP MLD and the non-AP MLD may perform the method in any one of the foregoing embodiments.

Method or algorithm steps described in combination with the content disclosed in this application may be implemented by using hardware, or may be implemented by using a processor by executing a software instruction. The software instructions may include a corresponding software module. The software module may be stored in a random access memory (Random Access Memory, RAM), a flash memory, an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a core network interface device. Certainly, the processor and the storage medium may exist in the core network interface device as discrete components.

A person skilled in the art should be aware that in the foregoing one or more examples, functions described in this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer-readable storage medium and a communication medium. The communication medium includes any medium that facilitates transmission of a computer program from one place to another. The storage medium may be any available medium accessible to a general-purpose or a dedicated computer.

In the foregoing specific implementations, the objectives, technical solutions, and advantageous effects of this application are further described in detail. It should be understood that the foregoing descriptions are only specific implementations of this application, but are not intended to limit the protection scope of this application. Any modification, equivalent replacement, improvement, or the like made based on the technical solutions of this application shall fall within the protection scope of this application.

## Claims

1. A link indication method for multi-link communication, comprising:
generating, by an access point multi-link device AP MLD, a first frame, wherein the first frame carries link indication information, the link indication information indicates one or more second links, and the first frame indicates a non-access point multi-link device non-AP MLD to enable the one or more second links; and
sending, by the AP MLD, the first frame on a first link.

2. A link indication method for multi-link communication, comprising:
receiving, by a non-access point multi-link device non-AP MLD, a first frame on a first link, wherein the first frame carries link indication information, the link indication information indicates one or more second links, and the first frame indicates the non-AP MLD to enable the one or more second links; and
enabling, by the non-AP MLD, the one or more second links based on the link indication information carried in the first frame.

3. The method according to claim 1 or 2, wherein the first frame is a multi-user request to send MU-RTS frame, and the link indication information is carried in a user information field in the MU-RTS frame.

4. The method according to claim 3, wherein the user information field comprises a link information field or a link identifier bitmap, and the link indication information is carried in the link information field or the link identifier bitmap.

5. The method according to claim 4, wherein the user information field further comprises an association identifier AID 12 field and a real AID field;
a value of the AID 12 field is a preset value, and the AID 12 field indicates that the user information field comprises the link information field or the link identifier bitmap; and
the real AID field indicates an AID of the non-AP MLD.

6. The method according to claim 4, wherein a reserved bit in the user information field indicates that the user information field comprises the link information field or the link identifier bitmap.

7. The method according to claim 1 or 2, wherein the first frame is an MU-RTS frame, the MU-RTS frame comprises two user information fields corresponding to the non-AP MLD, namely, a first user information field and a second user information field, the link indication information is carried in the second user information field, and the first user information field indicates the non-AP MLD to transmit resource scheduling information for a clear to send CTS frame.

8. The method according to claim 7, wherein the second user information field comprises a link information field or a link identifier bitmap, and the link indication information is carried in the link information field or the link identifier bitmap.

9. The method according to claim 8, wherein the second user information field further comprises an AID 12 field, the AID 12 field indicates that the second user information field comprises the link information field or the link identifier bitmap, and a value of the AID 12 field is a preset value, or a value of the AID 12 field is equal to a value of an AID 12 field in the first user information field.

10. The method according to claim 1 or 2, wherein the first frame is a data frame, and the link indication information is carried in an aggregated control A-control field in a media access control header MAC header of the data frame.

11. The method according to claim 1 or 2, wherein the link indication information is carried in a frame body.

12. The method according to any one of claims 1 to 11, wherein the link indication information comprises a link identifier of the second link; or
the link indication information comprises a link identifier of the second link and a number of spatial streams of the second link.

13. The method according to any one of claims 1 to 12, wherein the second link is in an idle state; or
a backoff counter value of the AP MLD in channel contention on the second link is less than or equal to a preset threshold; or
a length of a data packet received by the AP MLD on the second link is less than or equal to a preset length.

14. The method according to any one of claims 1, and 3 to 13, wherein the method further comprises:
when duration of channel contention of the AP MLD on the second link exceeds first duration, stopping, by the AP MLD, performing channel contention on the second link, or skipping, by the AP MLD, sending data to the non-AP MLD after successful channel contention on the second link.

15. The method according to any one of claims 2 to 13, wherein the method further comprises:
when duration in which the non-AP MLD enables the second link exceeds first duration, and no frame sent by the AP MLD to the non-AP MLD is received on the second link within the first duration, disabling, by the non-AP MLD, the second link.

16. The method according to claim 14 or 15, wherein a value of the first duration is equal to a transmission opportunity TXOP duration limit TXOP limit; or
a value of the first duration is equal to a TXOP limit corresponding to an access category AC of a data frame received by the non-AP MLD on the first link; or
a value of the first duration is equal to a maximum length of a physical layer protocol data unit PPDU.

17. The method according to claim 14 or 15, wherein a value of the first duration is equal to a time length indicated by a duration duration field in the first frame.

18. A communication apparatus, comprising:
a processing unit, configured to generate a first frame, wherein the first frame carries link indication information, the link indication information indicates one or more second links, and the first frame indicates a non-access point multi-link device non-AP MLD to enable the one or more second links; and
a transceiver unit, configured to send the first frame on a first link.

19. A communication apparatus, comprising:
a transceiver unit, configured to receive a first frame on a first link, wherein the first frame carries link indication information, the link indication information indicates one or more second links, and the first frame indicates the communication apparatus to enable the one or more second links; and
a processing unit, configured to enable the one or more second links based on the link indication information carried in the first frame.

20. The communication apparatus according to claim 18 or 19, wherein the first frame is a multi-user request to send MU-RTS frame, and the link indication information is carried in a user information field in the MU-RTS frame.

21. The communication apparatus according to claim 20, wherein the user information field comprises a link information field or a link identifier bitmap, and the link indication information is carried in the link information field or the link identifier bitmap.

22. The communication apparatus according to claim 21, wherein the user information field further comprises an association identifier AID 12 field and a real AID field;
a value of the AID 12 field is a preset value, and the AID 12 field indicates that the user information field comprises the link information field or the link identifier bitmap; and
the real AID field indicates an AID of the non-AP MLD.

23. The communication apparatus according to claim 21, wherein a reserved bit in the user information field indicates that the user information field comprises the link information field or the link identifier bitmap.

24. The communication apparatus according to claim 18 or 19, wherein the first frame is an MU-RTS frame, the MU-RTS frame comprises two user information fields corresponding to the non-AP MLD, namely, a first user information field and a second user information field, the link indication information is carried in the second user information field, and the first user information field indicates the non-AP MLD to transmit resource scheduling information for a clear to send CTS frame.

25. The communication apparatus according to claim 24, wherein the second user information field comprises a link information field or a link identifier bitmap, and the link indication information is carried in the link information field or the link identifier bitmap.

26. The communication apparatus according to claim 25, wherein the second user information field further comprises an AID 12 field, the AID 12 field indicates that the second user information field comprises the link information field or the link identifier bitmap, and a value of the AID 12 field is a preset value, or a value of the AID 12 field is equal to a value of an AID 12 field in the first user information field.

27. The communication apparatus according to claim 18 or 19, wherein the first frame is a data frame, and the link indication information is carried in an aggregated control A-control field in a media access control header MAC header of the data frame.

28. The communication apparatus according to claim 18 or 19, wherein the link indication information is carried in a frame body.

29. The communication apparatus according to any one of claims 18 to 28, wherein the link indication information comprises a link identifier of the second link; or
the link indication information comprises a link identifier of the second link and a number of spatial streams of the second link.

30. The communication apparatus according to any one of claims 18 to 29, wherein the second link is in an idle state;
a backoff counter value in channel contention on the second link is less than or equal to a preset threshold; or
a length of a data packet received on the second link is less than or equal to a preset length.

31. The communication apparatus according to any one of claims 18, and 20 to 30, wherein the processing unit is further configured to: when duration of channel contention on the second link exceeds first duration, stop performing channel contention on the second link, or skip sending data to the non-AP MLD after successful channel contention on the second link.

32. The communication apparatus according to any one of claims 19 to 30, wherein the processing unit is further configured to: if duration of enabling the second link exceeds first duration, and no frame sent by the AP MLD to the communication apparatus is received on the second link within the first duration, disable the second link.

33. The communication apparatus according to claim 31 or 32, wherein a value of the first duration is equal to a transmission opportunity TXOP duration limit TXOP limit; or
a value of the first duration is equal to a TXOP limit corresponding to an access category AC of a data frame received by the non-AP MLD on the first link; or
a value of the first duration is equal to a maximum length of a physical layer protocol data unit PPDU.

34. The communication apparatus according to claim 31 or 32, wherein a value of the first duration is equal to a time length indicated by a duration duration field in the first frame.

35. A communication apparatus, comprising a processor and a transceiver, wherein the processor is configured to generate a first frame, wherein the first frame carries link indication information, the link indication information indicates one or more second links, and the first frame indicates a non-AP MLD to enable the one or more second links; and the transceiver is configured to send the first frame on a first link.

36. A communication apparatus, comprising a processor and a transceiver, wherein the transceiver unit is configured to receive a first frame on a first link, wherein the first frame carries link indication information, the link indication information indicates one or more second links, and the first frame indicates the non-AP MLD to enable the one or more second links; and the processor is configured to enable the one or more second links based on the link indication information carried in the first frame.

37. A computer-readable storage medium, wherein the computer-readable storage medium stores instructions; and when the instructions are run on a computer, the computer is enabled to perform the method according to any one of claims 1 to 17.

38. A computer program product that comprises instructions, wherein when the instructions are run on a computer, the computer performs the method according to any one of claims 1 to 17.

39. A chip or a chip system, comprising a processing circuit and an interface circuit, wherein the interface circuit is configured to receive and transmit code instructions to the processing circuit, and the processing circuit is configured to run the code instructions to perform the method according to any one of claims 1 to 17.
